(19) Europäisches Patentamt / European Patent Office / Office européen des brevets

(11) **EP 4 583 442 A1**

(12) **EUROPEAN PATENT APPLICATION**
published in accordance with Art. 153(4) EPC

(43) Date of publication:
**09.07.2025 Bulletin 2025/28**

(21) Application number: **22960326.1**

(22) Date of filing: **30.09.2022**

(51) International Patent Classification (IPC):
**H04L 5/00** (2006.01)    **H04W 64/00** (2009.01)
**H04W 72/04** (2023.01)

(52) Cooperative Patent Classification (CPC):
**H04L 5/00; H04W 64/00; H04W 72/04**

(86) International application number:
**PCT/CN2022/123348**

(87) International publication number:
**WO 2024/065707 (04.04.2024 Gazette 2024/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
- **ZHANG, Shichang**
  **Dongguan, Guangdong 523860 (CN)**
- **MA, Teng**
  **Dongguan, Guangdong 523860 (CN)**

(74) Representative: **Penza, Giancarlo**
**Bugnion S.p.A.**
**Viale Lancetti, 17**
**20158 Milano (IT)**

(54) **SIDELINK COMMUNICATION METHODS AND APPARATUSES, DEVICE, STORAGE MEDIUM AND PROGRAM PRODUCT**

(57)    A method and apparatus for sidelink communication, a device, a storage medium and a program product, relate to the technical field of communications. The method includes that: a first terminal device transmits (1210) first information, herein the first information is configured to indicate a transmission manner of an SL PRS. The first information configured to indicate the transmission manner of the SL PRS is transmitted from the first terminal device to the second terminal device, so as to indicate the second terminal to receive the SL PRS. Therefore, the resource utilization efficiency on sidelink carriers is improved, and the performance of sidelink positioning and sidelink communication systems is enhanced.

```
┌──────────────────────┐          ┌──────────────────────┐
│  First terminal device│          │  Second terminal     │
│                       │          │      device          │
└──────────┬───────────┘          └──────────┬───────────┘
           │  1210,Transmit first information,│
           │   herein the first information is │
           │   configured to indicate a        │
           │  transmission manner of an SL PRS │
           │─────────────────────────────────▶│
```

**FIG. 12**

**Description**

TECHNICAL FIELD

Embodiments of the disclosure relate to the technical field of communications, and in particularly to a method and apparatus for sidelink communication, a device, a storage medium, and a program product.

BACKGROUND

In sidelink (SL) communication, sidelink positioning reference signal (SL PRS) has been introduced. Based on this, further research is needed regarding the sidelink communication process between terminal devices.

SUMMARY

The embodiments of the disclosure provide a method and apparatus for sidelink communication, a device, a storage medium, and a program product. Technical solutions are implemented as follows.
According to an aspect of the embodiments of the disclosure, there is provided a method for sidelink communication, executed by a first terminal device, and including the following operation.
First information is transmitted, herein the first information is configured to indicate a transmission manner of a sidelink positioning reference signal (SL PRS).
According to an aspect of the embodiments of the disclosure, there is provided a method for sidelink communication, executed by a second terminal device, and including the following operation.
First information is received, herein the first information is configured to indicate a transmission manner of an SL PRS.
According to an aspect of the embodiments of the disclosure, there is provided an apparatus for sidelink communication, including a transmitting module.
The transmitting module is configured to transmit first information, herein the first information is configured to indicate a transmission manner of an SL PRS.
According to an aspect of the embodiments of the disclosure, there is provided an apparatus for sidelink communication, including a receiving module.
The receiving module is configured to receive first information, herein the first information is configured to indicate a transmission manner of an SL PRS.
According to an aspect of the embodiments of the disclosure, there is provided a terminal device, including a processor and a memory having stored thereon a computer program, and the processor executes the computer program to implement the above method for sidelink communication.
According to an aspect of the embodiments of the disclosure, there is provided a computer-readable storage medium, having stored thereon a computer program, and the computer program is configured to be executed by a processor to implement the above method for sidelink communication.
According to an aspect of the embodiments of the disclosure, there is provided a chip, including a programmable logic circuit and/or a program instruction, and the chip, when is running, is configured to implement the above method for sidelink communication.
According to an aspect of the embodiments of the disclosure, there is provided a computer program product, including a computer program stored in a computer-readable storage medium, and a processor reads and executes the computer program from the computer-readable storage medium to implement the above method for sidelink communication.
The technical solutions according to the embodiments of the disclosure may include the following beneficial effects.
The first information configured to indicate the transmission manner of the SL PRS is transmitted from the first terminal device to the second terminal device, so as to indicate the second terminal to receive the SL PRS. Therefore, the resource utilization efficiency on sidelink carriers is improved, and the performance of sidelink positioning and sidelink communication systems is enhanced.

BRIEF DESCRIPTION OF THE DRAWINGS

FIG. 1 is a schematic diagram of a network architecture according to an embodiment of the disclosure;
FIG. 2 is a schematic diagram of sidelink communication within a coverage range of a network according to an embodiment of the disclosure;

FIG. 3 is a schematic diagram of sidelink communication with partial network coverage according to an embodiment of the disclosure;

FIG. 4 is a schematic diagram of sidelink communication outside network coverage according to an embodiment of the disclosure;

FIG. 5 is a schematic diagram of unicast according to an embodiment of the disclosure;

FIG. 6 is a schematic diagram of multicast according to an embodiment of the disclosure;

FIG. 7 is a schematic diagram of broadcast according to an embodiment of the disclosure;

FIG. 8 is a schematic diagram of a time-domain resource allocation for NR-V2X according to an embodiment of the disclosure;

FIG. 9 is a schematic diagram of a slot structure for PSCCH and PSSCH according to an embodiment of the disclosure;

FIG. 10 is a schematic diagram of time-domain positions of 4 DMRS symbols when a PSSCH consists of 13 symbols, according to an embodiment of the disclosure;

FIG. 11 is a schematic diagram of frequency-domain positions of PSSCH DMRS according to an embodiment of the disclosure;

FIG. 12 is a flowchart of a method for sidelink communication according to an embodiment of the disclosure;

FIG. 13 is a schematic diagram of a method for sidelink communication according to an embodiment of the disclosure;

FIG. 14 is a schematic diagram of a method for sidelink communication according to another embodiment of the disclosure;

FIG. 15 is a schematic diagram of a method for sidelink communication according to yet another embodiment of the disclosure;

FIG. 16 is a schematic diagram of a first resource pool and a second resource pool according to an embodiment of the disclosure;

FIG. 17 is a schematic diagram of time-frequency resource positions of resource pools according to an embodiment of the disclosure;

FIG. 18 is a schematic diagram of a resource mapping relationship according to an embodiment of the disclosure;

FIG. 19 is a schematic diagram of a resource selection according to an embodiment of the disclosure;

FIG. 20 is a schematic diagram of time-frequency resource positions of resource subsets according to an embodiment of the disclosure;

FIG. 21 is a schematic diagram of a first resource subset and a second resource subset according to an embodiment of the disclosure;

FIG. 22 is a schematic diagram of a resource mapping relationship according to another embodiment of the disclosure;

FIG. 23 is a schematic diagram of a resource mapping relationship according to yet another embodiment of the disclosure;

FIG. 24 is a block diagram of an apparatus for sidelink communication according to an embodiment of the disclosure;

FIG. 25 is a block diagram of an apparatus for sidelink communication according to another embodiment of the disclosure;

FIG. 26 is a block diagram of an apparatus for sidelink communication according to yet another embodiment of the disclosure; and

FIG. 27 is a schematic structural diagram of a terminal device according to an embodiment of the disclosure.

## DETAILED DESCRIPTION

In order to clarify the purpose, technical solutions and advantages of the disclosure, a further detailed description of the embodiments of the disclosure is provided below in combination with the drawings.

A network architecture and business scenarios described in the embodiments of the disclosure are intended to provide a clearer explanation of the technical solutions in the embodiments of the disclosure, and do not limit the technical solutions according to the embodiments of the disclosure. It is known by those skilled in the art that with the evolution of the network architecture and the emergence of new business scenarios, the technical solutions according to the embodiments of the disclosure are also applicable to similar technical problems.

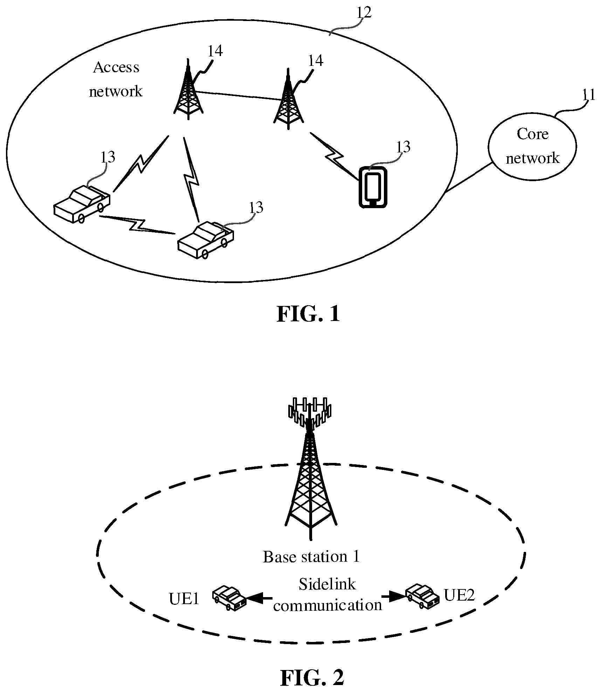

Please refer to FIG. 1, which illustrates a schematic diagram of a network architecture according to an embodiment of the disclosure. The network architecture may include a core network 11, an access network 12, and terminal devices 13.

The core network 11 includes several core network devices. The main functions of the core network devices are to provide user connections, manage users, and carry out business services, serving as a bearer network providing interfaces to external networks. For example, a core network of a 5th Generation (5G) new radio (NR) system may include devices such as an access and mobility management function (AMF) entity, a user plane function (UPF) entity, and a session management function (SMF) entity.

The access network 12 includes several access network devices 14. An access network in the 5G NR system may be referred to as a new generation radio access network (NG-RAN). The access network devices 14 are deployed in the access network 12 to provide wireless communication function for the terminal devices 13. The access network devices 14 may include various forms of macro base stations, micro base stations, relay stations, access points, etc. In systems employing different wireless access technologies, names of devices with access network device functionalities may change, for example, in the 5G NR system, they are referred to as gNodeB or gNB. With the evolution of communication technologies, the term "access network device" may change. For ease of description, in the embodiments of the disclosure, the devices that provide wireless communication function for the terminal devices 13 are collectively referred to as access network devices. Furthermore, in the embodiments of the disclosure, the network devices mentioned refer to access network devices, such as base stations, unless otherwise specified.

A number of the terminal devices 13 is typically multiple, and one or more terminal devices 13 may be distributed within a cell managed by each access network device 14. The terminal devices 13 may include various handheld devices, vehicle-mounted devices, wearable devices, computing devices, or other processing devices connected to wireless modems, and various forms of user equipment (UE) and mobile station (MS), etc., all of which have wireless communication function. For ease of description, these devices are collectively referred to as terminal devices. The access network device 14 and the core network device communicate with each other via some air technology, such as a next generation (NG) interface in the 5G NR system. The access network device 14 and the terminal device 13 communicate with each other via some air technology, such as an Uu interface. Furthermore, in the embodiments of the disclosure, the terms "terminal device" and "UE" are usually interchangeably but express the same meaning.

A terminal device 13 and a terminal device 13 (e.g., a vehicle-mounted device and other device (such as other vehicle-mounted device, mobile phone, road side unit (RSU), etc.) may communicate with each other via a direct communication interface (e.g., a PC5 interface). Correspondingly, a communication link established based on the direct communication interface may be referred to as a direct link or sidelink (SL). SL transmission refers to direct communication data transmission between terminal devices via the sidelink, which differs from traditional cellular systems where communication data is received or transmitted through access network devices. SL transmission has characteristics of short latency and low overhead, and is suitable for communication between two terminal devices that are geographically close, such as a vehicle-mounted device and other nearby device in proximity. It should be noted that in FIG. 1, only vehicle to vehicle communication in a vehicle to everything (V2X) scenario is illustrated as an example, and SL technology may be applied to various scenarios where terminal devices communicate directly with each other. In other words, terminal devices in the disclosure refer to any device that utilizes the SL technology for communication.

The "5G NR system" in the embodiments of the disclosure may also be referred to as a 5G system or NR system, and the meaning of these terms may be understood by those skilled in the art. The technical solutions described in the embodiments of the disclosure may be applied to the 5G NR system, and may also be applied to subsequent evolution systems of the 5G NR system.

Before introducing the technical solutions of the disclosure, some background technical knowledge related to the disclosure is introduced and explained. The following related technologies may be optionally integrated with the technical solutions of the embodiments of the disclosure in any combination, and they all fall within the scope of protection of the embodiments of the disclosure. The embodiments of the disclosure include at least some of the following contents.

1. Sidelink communication under different network coverage environments

According to the network coverage situation of terminal devices engaged in communication, sidelink communication may be classified into sidelink communication within network coverage, sidelink communication with partial network coverage, and sidelink communication outside network coverage.

In sidelink communication within network coverage, all terminal devices engaged in sidelink communication are within a coverage range of a same access network device (base station). Therefore, these terminal devices may all receive configuration signaling from the access network device (base station), and perform sidelink communication based on the same sidelink configuration. Exemplarily, as shown in FIG. 2, both UE1 and UE2 are within the coverage range of base station 1.

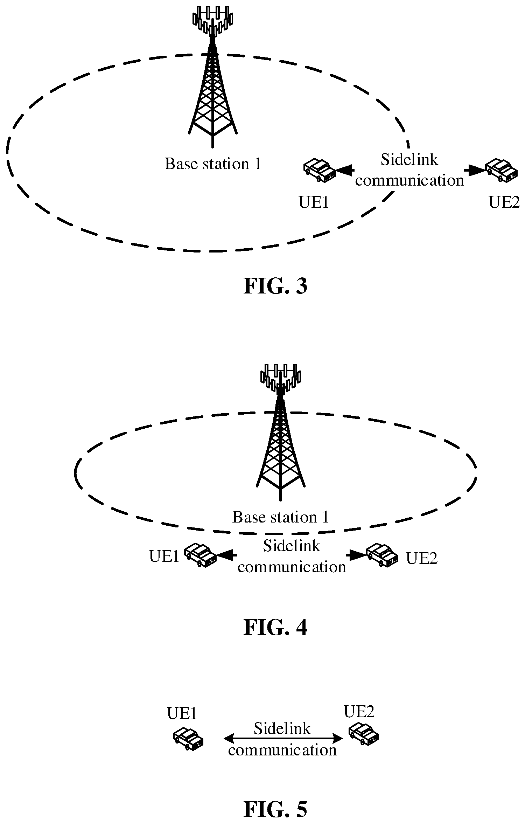

In sidelink communication with partial network coverage, some of terminal devices engaged in sidelink communication are within a coverage range of an access network device (base station), and may receive configuration signaling from the access network device (base station) and perform sidelink communication based on the configuration of the access network device (base station). On the other hand, terminal devices outside the network coverage range cannot receive the configuration signaling from the access network device (base station). In this case, the terminal devices outside the network coverage range determine sidelink configuration based on pre-configuration information and information carried in a physical sidelink broadcast channel (PSBCH) transmitted by the terminal devices within the network coverage range, and perform sidelink communication. Exemplarily, as shown in FIG. 3, UE1 is within the network coverage range of base station 1, and UE2 is outside the network coverage range of base station 1.

For sidelink communication outside network coverage, all terminal devices engaged in sidelink communication are outside a network coverage range, and all terminal devices determine sidelink configuration based on the pre-configuration information and perform sidelink communication. Exemplarily, as shown in FIG. 4, UE1 and UE2 are both outside the network coverage range of base station 1.

### 2. D2D/V2X

Device to device (D2D) communication is a sidelink transmission technology based on D2D, which differs from the way of receiving or transmitting communication data through a base station in the traditional cellular system. Therefore, D2D communication has higher spectral efficiency and lower transmission latency. The V2X system adopts direct communication from terminal device to terminal device, and two transmission modes (i.e., a first mode and a second mode) are defined in the third generation partnership project (3GPP).

In the first mode, transmission resources for the terminal device are allocated by the base station, and the terminal device transmits data on the sidelink based on the resources allocated by the base station. The base station may allocate single-transmission resources or semi-static transmission resources for the terminal device. As shown in FIG. 2, the terminal devices are all within the network coverage range, and the base station allocates transmission resources for sidelink transmission for the terminal devices.

In the second mode, the terminal device selects a resource from a resource pool for data transmission. As shown in FIG. 4, the terminal devices are all outside the coverage range of the cell, and the terminal devices autonomously select transmission resources from a pre-configured resource pool for sidelink transmission. Alternatively, as shown in FIG. 2, the terminal devices autonomously select transmission resources from a resource pool configured by the base station for sidelink transmission.

Resource selection in the second mode includes the following two operations.

At operation 1, the terminal device designates all available resources within a resource selection window as a resource set A.

If the terminal device transmits data in certain slots within a listening window and does not perform listening, then all resources in the corresponding slots within the selection window are excluded. The terminal device uses a value set of "resource reservation period" field in a configuration of the resource pool, to determine the corresponding slots within the selection window.

If the terminal device detects a physical sidelink control channel (PSCCH) within the listening window, the terminal device measures a reference signal received power (RSRP) of the PSCCH or a RSRP of a physical sidelink shared channel (PSSCH) scheduled by the PSCCH. If the measured RSRP is greater than a sidelink reference signal received power (SL-RSRP) threshold and reserved resources are determined to be within the resource selection window based on resource reservation information in sidelink control information transmitted in the PSCCH, then corresponding resources are excluded from the set A. If remaining resources in the resource set A are less than X% of all resources in the resource set A before resource exclusion, then the SL-RSRP threshold is increased by 3dB and operation 1 is re-executed. Possible values of X are {20, 35, 50}, and the terminal device determines the parameter X from this set based on a priority of data to be transmitted. Moreover, the SL-RSRP threshold is related to a priority carried in the PSCCH detected by the terminal device and the priority of the data to be transmitted by the terminal device. The terminal device designates remaining resources in the set A after resource exclusion as a candidate resource set.

At operation 2, the terminal device randomly selects several resources from the candidate resource set as transmission resources for initial transmission and retransmissions of the terminal device.

### 3. NR-V2X

In NR-V2X, autonomous driving needs to be supported, thus placing higher demands on data interaction between vehicles, such as higher throughput, lower latency, higher reliability, larger coverage, and more flexible resource allocation.

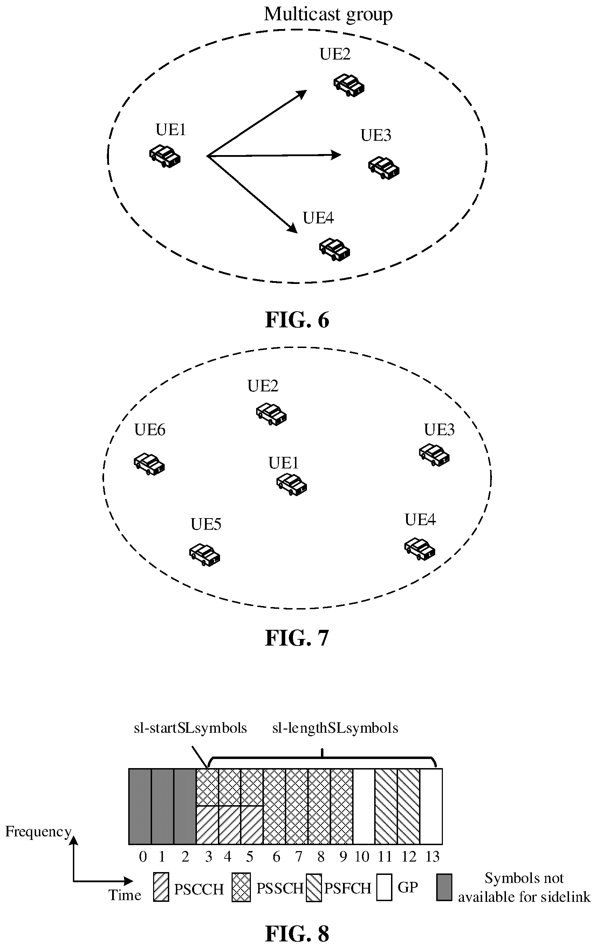

In long term evaluation (LTE)-V2X, broadcast transmission is supported. In NR-V2X, unicast and multicast transmission manners are introduced. For unicast transmission, there is only one terminal device at the receiving end. As shown in FIG. 5, UE1 and UE2 engage in unicast transmission. For multicast transmission, the receiving-end terminal devices are all terminal devices within a communication group, or all terminal devices within a certain transmission distance. As shown in FIG. 6, UE1, UE2, UE3 and UE4 form a communication group, and UE1 transmits data and the other terminal devices (UE2, UE3, and UE4) in the group are all receiving-end terminal devices. For broadcast transmission, the receiving-end terminal devices are any terminal devices around the transmitting-end terminal device. As shown in FIG. 7, UE1 is the transmitting-end terminal device, and the other terminal devices (i.e., UE2, UE3, UE4, UE5, and UE6) around UE1 are all receiving-end terminal devices.

4. Slot structure in NR-V2X

In NR-V2X, a PSSCH and its associated PSCCH are transmitted in a same slot, with the PSCCH occupying 2 or 3 time-domain symbols. The time-domain resource allocation in NR-V2X is based on a slot as the allocation granularity. A starting point and length of time-domain symbols configured for sidelink transmission within a slot are configured via parameters sl-startSLsymbols and sl-lengthSLsymbols. The last symbol in this part of the symbols is configured as a guard period (GP), and the PSSCH and the PSCCH only use remaining time-domain symbols. However, if a slot is configured with physical sidelink feedback channel (PSFCH) transmission resources, the PSSCH and the PSCCH cannot occupy time-domain symbols configured for PSFCH transmission, and automatic gain control (AGC) and GP symbols before the symbols configured for PSFCH transmission.

As shown in FIG. 8, the network configures sl-StartSymbol=3 and sl-LengthSymbols=11, which means that 11 time-domain symbols starting from symbol index 3 within a slot may be configured for sidelink transmission. PSFCH transmission resources are included in this slot, with the PSFCH occupying symbols 11 and 12, where symbol 11 is configured as the AGC symbol of the PSFCH, symbols 10 and 13 are configured as GP. Time-domain symbols available for PSSCH transmission are symbols 3 to 9, the PSCCH occupies 3 time-domain symbols (i.e., symbols 3, 4, and 5), and symbol 3 is usually configured as the AGC symbol.

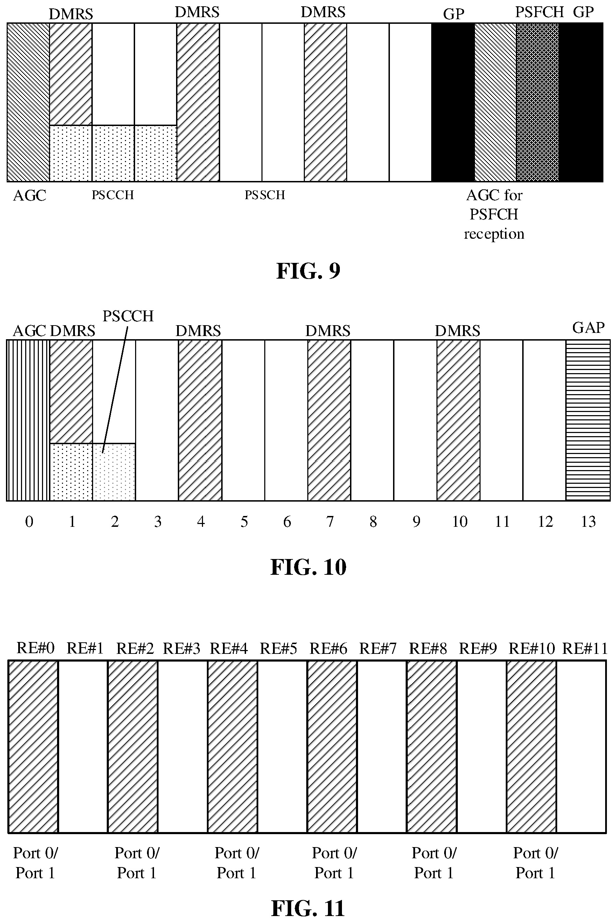

In NR-V2X, besides PSCCH and PSSCH, PSFCH may be included in a sidelink slot. As shown in FIG. 9, within a slot, a first orthogonal frequency division multiplexing (OFDM) symbol is fixed for AGC, and on the AGC symbol, the UE replicates information transmitted on a second symbol. A last symbol of the slot is reserved for switch between transmission and reception, allowing the UE to switch from a transmitting (or receiving) state to a receiving (or transmitting) state. Among remaining OFDM symbols, the PSCCH may occupy two or three OFDM symbols starting from a second sidelink symbol. In the frequency domain, a number of physical resource blocks (PRBs) occupied by the PSCCH is within a sub-band range of a PSSCH. If the number of PRBs occupied by the PSCCH is less than a size of one sub-channel of the PSSCH, or if frequency-domain resources of the PSSCH include multiple sub-channels, the PSCCH may be frequency-division multiplexed with the PSSCH on the OFDM symbols where the PSCCH is located.

In NR-V2X, a demodulation reference signal (DMRS) of the PSSCH draws on the design of the NR Uu interface, and adopts multiple time-domain PSSCH DMRS patterns. Within a resource pool, a number of available DMRS patterns is related to a number of PSSCH symbols within the resource pool. For a specific number of PSSCH symbols (including the first AGC symbol) and a specific number of PSCCH symbols, the available DMRS patterns and the position of each DMRS symbol within the pattern are shown in Table 1. FIG. 10 illustrates time-domain positions of 4 DMRS symbols when a PSSCH consists of 13 symbols.

Table 1: the number and positions of DMRS symbols with different numbers of PSSCH symbols and PSCCH symbols

| The number of PSSCH symbols (including the first AGC symbol) | Positions of DMRS symbols (relative to the position of the first AGC symbol) | | | | | |
| --- | --- | --- | --- | --- | --- | --- |
| | The number of PSCCH symbols is 2 | | | The number of PSCCH symbols is 3 | | |
| | The number of DMRS symbols | | | The number of DMRS symbols | | |
| | 2 | 3 | 4 | 2 | 3 | 4 |
| 6 | 1, 5 | | | 1, 5 | | |
| 7 | 1, 5 | | | 1, 5 | | |
| 8 | 1, 5 | | | 1, 5 | | |
| 9 | 3, 8 | 1, 4, 7 | | 4, 8 | 1, 4, 7 | |
| 10 | 3, 8 | 1, 4, 7 | | 4, 8 | 1, 4, 7 | |
| 11 | 3, 10 | 1, 5, 9 | 1, 4, 7, 10 | 4, 10 | 1, 5, 9 | 1, 4, 7, 10 |
| 12 | 3, 10 | 1, 5, 9 | 1, 4, 7, 10 | 4, 10 | 1, 5, 9 | 1, 4, 7, 10 |
| 3 | 3, 10 | 1, 6, 11 | 1, 4, 7, 10 | 4, 10 | 1, 6, 11 | 1, 4, 7, 10 |

If multiple time-domain DMRS patterns are configured in the resource pool, the specific time-domain DMRS pattern used is selected by the transmitting UE and indicated in the first-stage sidelink control information (SCI). This design allows high-speed moving UEs to select high-density DMRS patterns to ensure the accuracy of channel estimation, while low-speed moving UEs may use low-density DMRS patterns to improve spectral efficiency.

The manner of generating the PSSCH DMRS sequence is almost identical to the manner of generating the PSCCH DMRS sequence. The only difference lies in the initialization formula $c_{init}$ for the pseudo-random sequence c(m),

$$N_{ID} = \sum_{i=0}^{L-1} P_i \cdot 2^{L-1-i}$$
, herein $P_i$ is an i-th cyclic redundancy check (CRC) of the PSCCH scheduling the PSSCH, and L=24, which is the number of bits of the PSCCH CRC.

NR physical downlink shared channel (PDSCH) and physical uplink shared channel (PUSCH) support two frequency-domain DMRS patterns, i.e., DMRS frequency-domain type 1 and DMRS frequency-domain type 2. Each frequency-domain type includes two different DMRS symbol types, i.e., single DMRS symbol and dual DMRS symbol. The single-symbol DMRS frequency-domain type 1 supports 4 DMRS ports, and the single-symbol DMRS frequency-domain type 2 may support 6 DMRS ports. In the case of dual DMRS symbols, the number of ports supported by both DMRS frequency-domain type 1 and DMRS frequency-domain type 2 doubles. However, in NR-V2X, as shown in FIG. 11, since the PSSCH only needs to support up to two DMRS ports, only the single-symbol DMRS frequency-domain type 1 is supported.

5. Positioning based on sidelink

In 3GPP R-17, 3GPP RAN conducted studies on "NR positioning enhancement" and "scenarios and requirements for NR positioning use cases within coverage, within partial coverage, and outside coverage". The study on "scenarios and requirements for NR positioning use cases within coverage, within partial coverage, and outside coverage" focuses on V2X and public safety use cases, and the results are documented in TR38.845. Furthermore, SA1 formulated requirements for "ranging-based services" in TS22.261 and positioning accuracy requirements for industrial Internet of things (IIoT) use cases in out-of-coverage scenarios in TS22.104. 3GPP needs to research and develop sidelink positioning solutions, to support the use cases, scenarios, and requirements identified in these activities. In order to improve positioning accuracy, in particular for positioning of terminals outside cellular network coverage, 3GPP introduced positioning based on sidelink positioning reference signal (SL PRS) in Rel-18. According to current conclusions, the SL PRS may be transmitted in a dedicated resource pool. However, in order to support sidelink positioning and sidelink communication, the terminal device further need to transmit and receive sidelink positioning-related information (e.g., terminal mutual discovery information, configuration information, and measurement reporting information), and sidelink communication-related control and data information, etc., which need to be carried by sidelink channels, such as PSCCH and/or PSSCH.

Based on the above content, the disclosure proposes a method for sidelink communication that supports sidelink positioning and sidelink communication by transmitting a first message configured to indicate a transmission manner of an SL PRS.

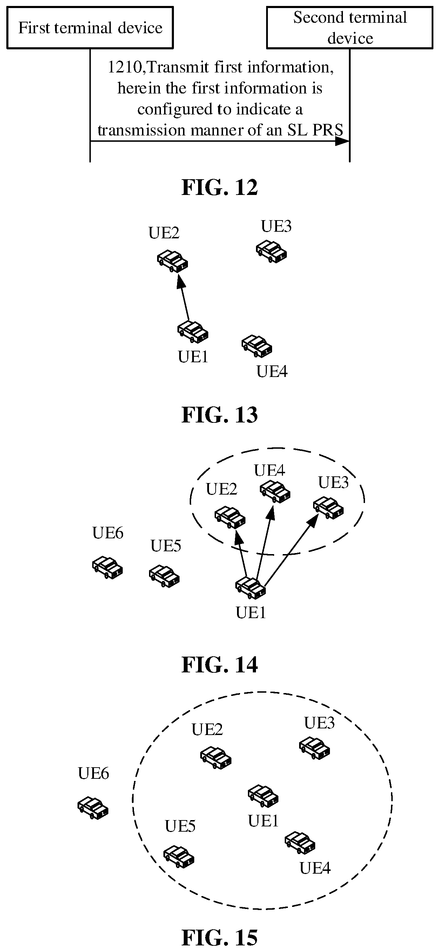

Please refer to FIG. 12, which illustrates a flowchart of a method for sidelink communication according to an embodiment of the disclosure. The method is executed by a first terminal device. The method may include the following operation 1210.

At 1210, the first terminal device transmits first information to a second terminal device, herein the first information is configured to indicate a transmission manner of an SL PRS.

Correspondingly, the second terminal device receives the first information transmitted by the first terminal device.

In some embodiments, the transmission manner of the SL PRS includes at least one of: a time-domain resource position of the SL PRS; a frequency-domain resource position of the SL PRS; a repetition period of the SL PRS; identification information of a transmitting terminal for the SL PRS; identification information of a receiving terminal for the SL PRS; or sequence information of the SL PRS.

The time-domain resource position of the SL PRS refers to the position of the time-domain resources occupied by the SL PRS in a resource pool.

The frequency-domain resource position of the SL PRS refers to the position of the frequency-domain resources occupied by the SL PRS in the resource pool.

The repetition period of the SL PRS refers to a time interval the SL PRS is repeatedly transmitted.

The identification information of the transmitting terminal for the SL PRS refers to the identification information of the terminal device transmitting the SL PRS, as indicated by the first information, such as an identifier (ID) of the terminal device transmitting the SL PRS.

The identification information of the receiving terminal for the SL PRS refers to the identification information of the terminal device receiving the SL PRS, as indicated by the first information, such as an ID of the terminal device receiving the SL PRS.

The sequence information of the SL PRS refers to information of a sequence of symbols that constitute the SL PRS.

In some embodiments, the first information may be configured to indicate the position of the time-domain resources occupied by the SL PRS in the resource pool, or to indicate a relationship between the position of the time-domain resources occupied by the SL PRS in the resource pool and a reference time-domain resource position. The reference time-domain resource position may be configured or pre-configured by a network, which is not limited in the disclosure.

Exemplarily, the first information may be configured to indicate the position of the slot occupied by the SL PRS in the resource pool, or to indicate a relationship between the position of the slot occupied by the SL PRS in the resource pool and a reference slot position.

In some embodiments, the first terminal device transmits the first information to the second terminal device via unicast. Exemplarily, as shown in FIG. 13, UE1 unicasts the first information to UE2.

In some embodiments, the first terminal device is the transmitting terminal device, and the second terminal device is the receiving terminal device. Exemplarily, as shown in FIG. 13, UE1 transmits first information to UE2, and the first information is configured to indicate a transmission manner of an SL PRS transmitted by UE1 to UE2.

In some embodiments, the first terminal device is not the transmitting terminal device, and the second terminal device is the receiving terminal device. Exemplarily, as shown in FIG. 13, UE1 transmits first information to UE2, and the first information is configured to indicate a transmission manner of an SL PRS transmitted by UE3 to UE2.

In some embodiments, the first terminal device is not the transmitting terminal device, and the second terminal device is not the receiving terminal device. Exemplarily, as shown in FIG. 13, UE1 transmits first information to UE2, and the first information is configured to indicate a transmission manner of an SL PRS transmitted by UE3 to UE4.

In some embodiments, the first terminal device transmits the first information to the second terminal device via multicast, herein the second terminal device is a terminal device within a multicast group. Exemplarily, as shown in FIG. 14, UE2, UE3, and UE4 form a multicast group, and UE1 multicasts the first information to the multicast group including UE2, UE3, and UE4.

In some embodiments, the first terminal device is the transmitting terminal device, and the second terminal device is within the multicast group. Exemplarily, as shown in FIG. 14, UE2, UE3, and UE4 form a multicast group, UE1 multicasts first information to the multicast group including UE2, UE3, and UE4, and the first information is configured to indicate a transmission manner of an SL PRS transmitted by UE1 to UE2.

In some embodiments, the first terminal device is the transmitting terminal device, and the second terminal device is not within the multicast group. Exemplarily, as shown in FIG. 14, UE2, UE3, and UE4 form a multicast group, UE1 multicasts first information to the multicast group including UE2, UE3, and UE4, and the first information is configured to indicate a transmission manner of an SL PRS transmitted by UE1 to UE5.

In some embodiments, the first terminal device is not the transmitting terminal device, and the second terminal device is within the multicast group. Exemplarily, as shown in FIG. 14, UE2, UE3, and UE4 form a multicast group, UE1 multicasts first information to the multicast group including UE2, UE3, and UE4, and the first information is configured to indicate a transmission manner of an SL PRS transmitted by UE5 to UE3.

In some embodiments, the first terminal device is not the transmitting terminal device, and the second terminal device is not within the multicast group. Exemplarily, as shown in FIG. 14, UE2, UE3, and UE4 form a multicast group, UE1 multicasts first information to the multicast group including UE2, UE3, and UE4, and the first information is configured to indicate a transmission manner of an SL PRS transmitted by UE5 to UE6.

In some embodiments, the first terminal device transmits the first information to the second terminal device via broadcast, and the second terminal device is any terminal device that satisfies the broadcast condition. The broadcast condition includes the second terminal device being within a range threshold of the first terminal device. Exemplarily, as shown in FIG. 15, UE1 broadcasts the first information to UE2, UE3, UE4, and UE5.

In some embodiments, the first terminal device is the transmitting terminal device, and the second terminal device satisfies the broadcast condition. Exemplarily, as shown in FIG. 15, UE1 broadcasts first information to UE2, UE3, UE4, and UE5, and the first information is configured to indicate a transmission manner of an SL PRS transmitted by UE1 to UE2.

In some embodiments, the first terminal device is the transmitting terminal device, and the second terminal device does not satisfy the broadcast condition. Exemplarily, as shown in FIG. 15, UE1 broadcasts first information to UE2, UE3, UE4, and UE5, and the first information is configured to indicate a transmission manner of an SL PRS transmitted by UE1 to UE6.

In some embodiments, the first terminal device is not the transmitting terminal device, and the second terminal device satisfies the broadcast condition. Exemplarily, as shown in FIG. 15, UE1 broadcasts first information to UE2, UE3, UE4, and UE5, and the first information is configured to indicate a transmission manner of an SL PRS transmitted by UE2 to UE3.

In some embodiments, the first terminal device is not the transmitting terminal device, and the second terminal device does not satisfy the broadcast condition. Exemplarily, as shown in FIG. 15, UE1 broadcasts first information to UE2, UE3, UE4, and UE5, and the first information is configured to indicate a transmission manner of an SL PRS transmitted by UE2 to UE6.

According to the technical solution in the embodiments of the disclosure, the first information configured to indicate the transmission manner of the SL PRS is transmitted from the first terminal device to the second terminal device, so as to indicate the second terminal device to receive the SL PRS. Therefore, the resource utilization efficiency on sidelink carriers is improved, and the performance of sidelink positioning and sidelink communication systems is enhanced.

In some embodiments, a resource pool configured for transmitting the first information is a first resource pool, a resource pool configured for transmitting the SL PRS is a second resource pool, and the first resource pool and the second resource pool are different resource pools.

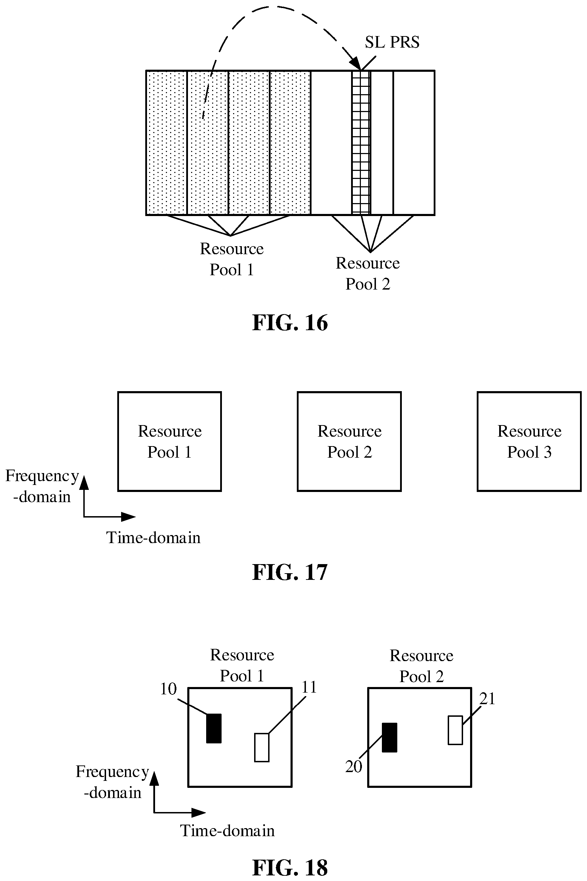

Exemplarily, as shown in FIG. 16, resource pool 1 is a first resource pool, resource pool 2 is a second resource pool, and first information transmitted in resource pool 1 is configured to indicate a transmission manner of an SL PRS transmitted in resource pool 2.

In some embodiments, the first resource pool and the second resource pool occupy different time-domain resources; and/or the first resource pool and the second resource pool occupy different frequency-domain resources.

Exemplarily, a first resource pool and a second resource pool occupy different time-domain resources. As shown in FIG. 17, resource pool 1 and resource pool 2 occupy different time-domain resources, but occupy the same frequency-domain resources.

Exemplarily, a first resource pool and a second resource pool occupy different frequency-domain resources. As shown in FIG. 17, resource pool 1 and resource pool 3 occupy different frequency-domain resources, but occupy the same time-domain resources.

Exemplarily, a first resource pool and a second resource pool occupy different time-domain resources and different frequency-domain resources. As shown in FIG. 17, resource pool 2 and resource pool 3 occupy different time-domain resources and different frequency-domain resources.

In some embodiments, a resource in the first resource pool and a first resource in the second resource pool have a mapping relationship.

Exemplarily, the resource for transmitting the first information in the first resource pool and the resource for transmitting the first SL PRS in the second resource pool have a correspondence. As shown in FIG. 18, resource pool 1 is a first resource pool, and resource pool 2 is a second resource pool. If the first information is transmitted on resource 10 in resource pool 1, the resource occupied by the first SL PRS in resource pool 2 is resource 20, and if the first information is transmitted on resource 11 in resource pool 1, the resource occupied by the first SL PRS in resource pool 2 is resource 21.

In some embodiments, a constraint condition is satisfied between a first time unit and a second time unit, the first time unit is a time unit where a resource for transmitting the first information is located, and the second time unit is a time unit where a first resource for transmitting the SL PRS is located.

In some embodiments, the constraint condition includes: a time interval the first time unit and the second time unit being greater than or equal to a minimum threshold; and/or the time interval between the first time unit and the second time unit being less than or equal to a maximum threshold.

Exemplarily, a time interval a first slot and a second slot being greater than or equal to the minimum threshold; and/or the time interval between the first slot and the second slot being less than or equal to the maximum threshold.

In some embodiments, the minimum threshold may be defined by the standard, or configured or pre-configured by the network, which is not limited in the disclosure. The setting of the minimum threshold provides time for decoding the first information for the receiving terminal device for the SL PRS.

In some embodiments, the maximum threshold is related to a priority of the SL PRS.

Exemplarily, the higher the priority of the SL PRS, the greater the maximum threshold, thus allowing a terminal device transmitting a high priority SL PRS to transmit first information corresponding to the SL PRS earlier, enabling the receiving terminal device to reserve resources earlier.

In some embodiments, the first information is further configured to indicate an index of the second resource pool.

Exemplarily, there are multiple second resource pools, and the first information is further configured to indicate an index of a second resource pool where the resources occupied by the SL PRS are located. For example, as shown in FIG. 17, resource pool 1 is a first resource pool, resource pool 2 and resource pool 3 are second resource pools. If the resource pool where the resources occupied by the SL PRS are located is resource pool 2, the first information is further configured to indicate an index of resource pool 2. If the resource pool where the resources occupied by the SL PRS are located is resource pool 3, the first information is further configured to indicate an index of resource pool 3.

In some embodiments, the first information is carried by at least one of the following information: a media access control control element (MAC CE), or second-stage sidelink control information (2nd-stage-SCI).

In some embodiments, the first information is transmitted on at least one of the following channels: a PSCCH, or a PSSCH.

In some embodiments, a number of bits of at least one of the following information items in the first information is determined based on a configuration of the second resource pool: a first information item, configured to indicate PRBs occupied by the SL PRS; a second information item, configured to indicate the repetition period of the SL PRS; a third information item, configured to indicate OFDM symbols occupied by the SL PRS; or a fourth information item, configured to indicate resource elements (REs) occupied by the SL PRS.

Exemplarily, the first information is carried in MAC CE information, and the information items included in the first information are fields.

The first information item is a reference slot location (RSL) field, and the RSL field is configured to indicate the PRBs occupied by the SL PRS, for example, the reference time-domain resource position. A length of this field may be 17 bits or $(10 + [\log_2(10 \cdot 2^\mu)])$ bits. Herein $\mu$ is granularity of the frequency-domain resources occupied by the SL PRS, i.e., the subcarrier spacing index of the carrier occupied by the SL PRS, with a value selected from 0, 1, 2, and 3, corresponding to 15KHz, 30KHz, 60KHz, and 120KHz, respectively. In the RSL field, 10 bits are used to indicate the system frame number (SFN) index, and the remaining bits are used to indicate the slot index within the SFN.

In some embodiments, the reference time-domain resource position is the position of the slot where the first resource of the first resource combination is located.

The second information item is an $RC_i$ field, and the $RC_i$ field is configured to indicate the repetition period of the SL PRS. Exemplarily, this field is configured to indicate resource combinations, and each resource combination indicates up to 3 slots for the SL PRS and frequency-domain resources within 2 slots for the SL PRS. The $RC_i$ field may include the repetition period of the SL PRS.

The third information item is an $SYM_{i,j}$ field, and the $SYM_{i,j}$ field is configured to indicate the OFDM symbols occupied by the SL PRS. Exemplarily, this field is configured to indicate OFDM symbols for the SL PRS in a j-th slot indicated by an i-th resource combination.

The fourth information item is an $RE_{i,j}$ field, and the $RE_{i,j}$ field is configured to indicate the REs occupied by the SL PRS. Exemplarily, this field is configured to indicate REs for the SL PRS in the j-th slot indicated by the i-th resource combination.

In some embodiments, the MAC CE information further includes at least one of the following fields: a First resource location$_{i-1}$ field, a DstID field, an SrID field, or an SqID field.

The First resource location$_{i-1}$ field is configured to indicate a time interval between a slot where a first resource of the i-th resource combination is located and a reference slot. The First resource location$_0$ field is configured to indicate a position of a slot where a first resource of a second resource combination is located relative to the reference slot, and so on. Since the reference time-domain resource position indicated in the RSL field may serve as a position of a slot where a first resource of a first resource combination is located, there is no need for the First resource location$_{i-1}$ field to indicate the position of the slot where the first resource of the first resource combination is located.

The DstID field is configured to indicate the identification information of the receiving terminal device for the SL PRS.

The SrID field is configured to indicate the identification information of the transmitting terminal device for the SL PRS.

The SqID field is configured to indicate the sequence information of the SL PRS, herein the sequence information of the SL PRS includes at least identification information of the SL PRS sequence.

In some embodiments, the first information is carried in the 2nd-stage-SCI information, and the information items included in the first information are bit fields.

In some embodiments, the first information is carried by a format 2-C of the 2nd-stage-SCI. A bit field of Source ID in the 2-C may be configured to indicate the identification information of the transmitting terminal device for the SL PRS, and a bit field of Destination ID in the 2-C may be configured to indicate the identification information of the receiving terminal device for the SL PRS. A bit field of SL PRS Resource combinations, a bit field of First resource location, a bit field of Reference slot location and a bit field of Lowest subChannel indices may be configured to indicate information such as the time-domain resource position and frequency-domain resource position occupied by the SL PRS, and the repetition period of the SL PRS. One or more of a bit field of hybrid automatic repeat request (HARQ) process number, a bit field of New data indicator, a bit field of Redundancy version, a bit field of HARQ feedback enabled/disabled indicator, and a bit field of channel state information (CSI) request in the 2-C may be configured to indicate other SL PRS transmission manner information, such as OFDM symbols occupied by the SL PRS, REs occupied by the SL PRS, etc. In the channel configured for scheduling SCI format 2-C, specific bit(s) should be configured to indicate that the first information is carried in the SCI format 2-C. For example, specific bit(s) in a bit field of Reserved may be configured to indicate that the first information is carried in the SCI format 2-C.

In some embodiments, the first information may be carried by a newly defined 2nd-stage-SCI format different from SCI formats 2-A, 2-B, and 2-C. A format field of the 2nd-stage-SCI format in the channel scheduling the newly defined 2nd-stage-SCI format should be set to "11". The newly defined 2nd-stage-SCI format should include at least one or more of the following bit fields:

a bit field configured to indicate the identification information of the transmitting terminal device for the SL PRS; a bit field configured to indicate the identification information of the receiving terminal device; a bit field configured to indicate the time-domain resource position occupied by the SL PRS; a bit field configured to indicate the frequency-domain resource position occupied by the SL PRS; a bit field configured to indicate the repetition period of the SL PRS; a bit field configured to indicate the OFDM symbols occupied by the SL PRS; or a bit field configured to indicate the REs occupied by the SL PRS.

In some embodiments, the first information is carried in the MAC CE information and the 2nd-stage-SCI information.

In some embodiments, the first information carried in the MAC CE information is the same as the first information carried in the 2nd-stage-SCI information. Exemplarily, the first information carried in the MAC CE includes the time-domain resource position of the SL PRS; the frequency-domain resource position of the SL PRS; the repetition period of the SL PRS; the identification information of the transmitting terminal for the SL PRS; the identification information of the receiving terminal for the SL PRS; and the sequence information of the SL PRS. The first information carried in the 2nd-stage-SCI information also includes the time-domain resource position of the SL PRS; the frequency-domain resource position of the SL PRS; the repetition period of the SL PRS; the identification information of the transmitting terminal for the SL PRS; the identification information of the receiving terminal for the SL PRS; and the sequence information of the SL PRS.

In some embodiments, the first information carried in the MAC CE information is different from the first information carried in the 2nd-stage-SCI information. Exemplarily, the first information carried in the MAC CE includes the time-domain resource position of the SL PRS; the frequency-domain resource position of the SL PRS; and the repetition period of the SL PRS. The first information carried in the 2nd-stage-SCI information includes the identification information of the transmitting terminal for the SL PRS; the identification information of the receiving terminal for the SL PRS; and the sequence information of the SL PRS.

It should be noted that if the resource in the first resource pool and the first resource in the second resource pool have a mapping relationship, the first information may not indicate the time-domain resource position occupied by the first SL PRS.

In some embodiments, the number of bits of the first information item is determined based on a number of PRBs included in the second resource pool and a frequency-domain resource granularity occupied by the SL PRS; and/or the number of bits of the second information item is determined based on a number of repetition periods allowed for the SL PRS in the second resource pool; and/or the number of bits of the third information item is determined based on a number of OFDM symbols included within a slot in the second resource pool and a minimum number of OFDM symbols allowed to be occupied by the SL PRS; and/or the number of bits of the fourth information item is determined based on a frequency-domain RE interval allowed for the SL PRS in the second resource pool.

In some embodiments, the first terminal device detects, within the first resource pool, information configured to indicate a transmission of the SL PRS transmitted by at least one other terminal device, and designates resources within a resource selection window in the second resource pool as a candidate resource set. The first terminal device excludes, from the candidate resource set, resources based on the information configured to indicate the transmission of the SL PRS transmitted by the at least one other terminal device, to obtain remaining resources in the candidate resource set. The first terminal device selects, from the remaining resources, a transmission resource for the SL PRS.

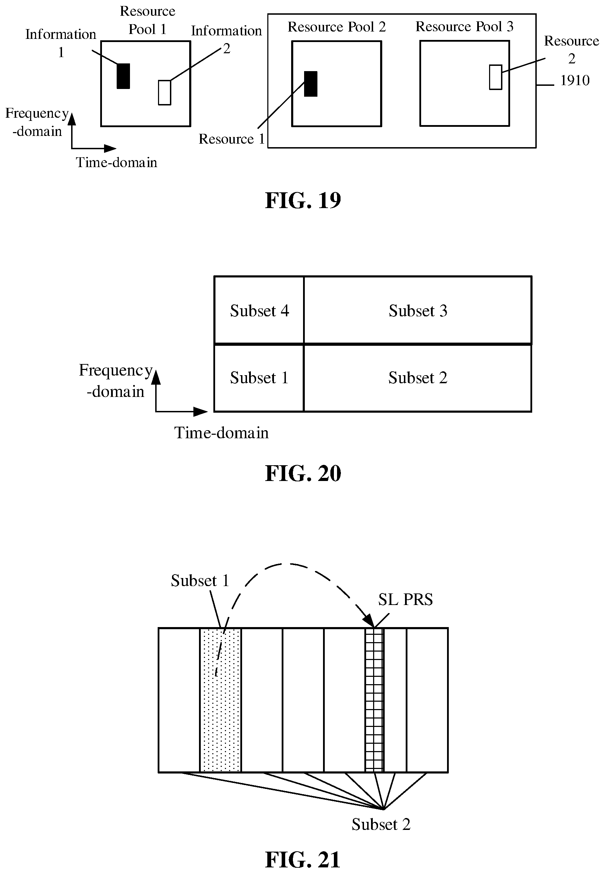

Exemplarily, as shown in FIG. 19, resource pool 1 is a first resource pool, and resource pools 2 and 3 are second resource pools. The first terminal device detects, within resource pool 1, information (information 1 and information 2) configured to indicate transmissions of SL PRSs transmitted by other terminal devices, and designates resources within resource selection windows in resource pools 2 and 3 as candidate resource set 1910. The first terminal device excludes, from the candidate resource set 1910, resources based on information 1 and information 2, to obtain remaining resources in the candidate resource set. The first terminal device selects, from the remaining resources, a transmission resource for the SL PRS. For example, if an SL PRS for information 1 occupies resource 1 and an SL PRS for information 2 occupies resource 2, then resource 1 and resource 2 are excluded to obtain the remaining resources in the candidate resource set, and the transmission resource for the SL PRS is selected from the remaining resources.

In some embodiments, the resources may be excluded from the candidate resource set based on the priority of the SL PRS and the information configured to indicate the transmission of the SL PRS transmitted by the at least one other terminal device, to obtain the remaining resources in the candidate resource set. The transmission resource for the SL PRS is selected from the remaining resources.

Exemplarily, the SL-RSRP threshold is determined based on the priority of the SL PRS, and resources with RSRPs of SL PRSs greater than the SL-RSRP threshold are excluded from the occupied resources.

The resources are excluded from the second resource pool to avoid conflicts in resource selection and improve the reliability of sidelink communication.

According to the technical solution in the embodiments of the disclosure, there is provided a method for transmitting the first information and the SL PRS in different resource pools. The first resource pool is configured for transmitting the first information, and the second resource pool is configured for transmitting the SL PRS. The first information is carried by the MAC CE information and/or the 2nd-stage-SCI information, ensuring transmissions of the SL PRS and the corresponding first information, thereby improving the reliability of sidelink communication.

In some embodiments, a resource pool configured for transmitting the first information and a resource pool configured for transmitting the SL PRS are a same resource pool.

In some embodiments, the resource pool includes a first resource subset and a second resource subset, the first resource subset is a resource subset configured for transmitting the first information, and the second resource subset is a resource subset configured for transmitting the SL PRS. Herein the first resource subset and the second resource subset occupy different time-domain resources in the resource pool, and/or the first resource subset and the second resource subset occupy different frequency-domain resources in the resource pool.

Exemplarily, the first resource subset and the second resource subset occupy different time-domain resources in the resource pool. Exemplarily, as shown in FIG. 20, the first resource subset is subset 1, the second resource subset is subset 2, and subset 1 and subset 2 occupy different time-domain resources in the resource pool.

Exemplarily, the first resource subset and the second resource subset occupy different frequency-domain resources in the resource pool. Exemplarily, as shown in FIG. 20, the first resource subset is subset 3, the second resource subset is subset 2, and subset 3 and subset 2 occupy different frequency-domain resources in the resource pool.

Exemplarily, the first resource subset and the second resource subset occupy different time-domain resources and different frequency-domain resources in the resource pool. Exemplarily, as shown in FIG. 20, the first resource subset is subset 4, the second resource subset is subset 2, and subset 4 and subset 2 occupy different time-domain resources and different frequency-domain resources in the resource pool.

In some embodiments, the first information, transmitted using any resource in the first resource subset, includes an information item configured to indicate time-frequency resources occupied by the SL PRS in the second resource subset.

That is, any resource in the first resource subset and the resource in the second resource subset do not have a mapping relationship. When using any resource in the first resource subset to transmit the first information, the first information includes the information item configured to indicate time-frequency resources occupied by the SL PRS in the second resource subset.

Exemplarily, as shown in FIG. 21, the first resource subset is subset 1, and the second resource subset is subset 2. The first information, transmitted in subset 1, is configured to indicate a transmission manner of an SL PRS transmitted in subset 2.

In some embodiments, for a first time unit belonging to the first resource subset, the first time unit includes N sub-channels, the N sub-channels and N SL PRS resources within a first time-domain range belonging to the second resource subset have a one-to-one correspondence. Herein the first information transmitted in an i-th sub-channel among the N sub-channels is configured to reserve an i-th SL PRS resource among the N SL PRS resources, N is an integer greater than 1, and i is a positive integer less than or equal to N.

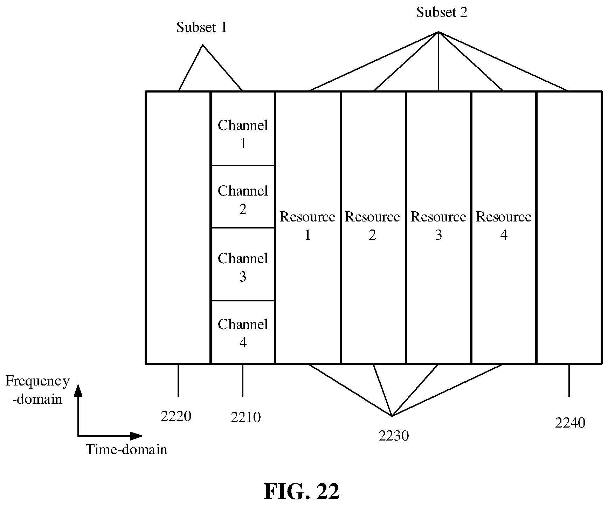

Exemplarily, as shown in FIG. 22, the first resource subset is subset 1, and the second resource subset is subset 2. The subset 1 includes the first time unit 2210 and the second time unit 2220. The first time unit 2210 includes four sub-channels: channel 1, channel 2, channel 3, and channel 4. The subset 2 includes a first time-domain range 2230 and a second time-domain range 2240. The first time-domain range 2230 includes four resources: resource 1, resource 2, resource 3, and resource 4. The four sub-channels in the first time unit 2210 and the four resources within the first time-domain range 2230 have a one-to-one correspondence. Channel 1 is configured to transmit first information for reserving resource 1. Channel 2 is configured to transmit first information for reserving resource 2. Channel 3 is configured to transmit first information for reserving resource 3. Channel 4 is configured to transmit first information for reserving resource 4.

The resources in the first resource subset and the resources in the second resource subset have a mapping relationship. Therefore, there is no need to indicate the time-frequency resources occupied by the SL PRS, nor is it necessary to perform resource exclusion on the resources in the second resource subset. Therefore, the reliability of sidelink communication is ensured, while the workload of the first terminal device transmitting the first information is reduced.

In some embodiments, complete frequency-domain resources corresponding to the first time unit include a first portion of frequency-domain resources and a second portion of frequency-domain resources. The first portion of frequency-domain resources includes the N sub-channels. The second portion of frequency-domain resources is configured to transmit information related to sidelink positioning other than the first information.

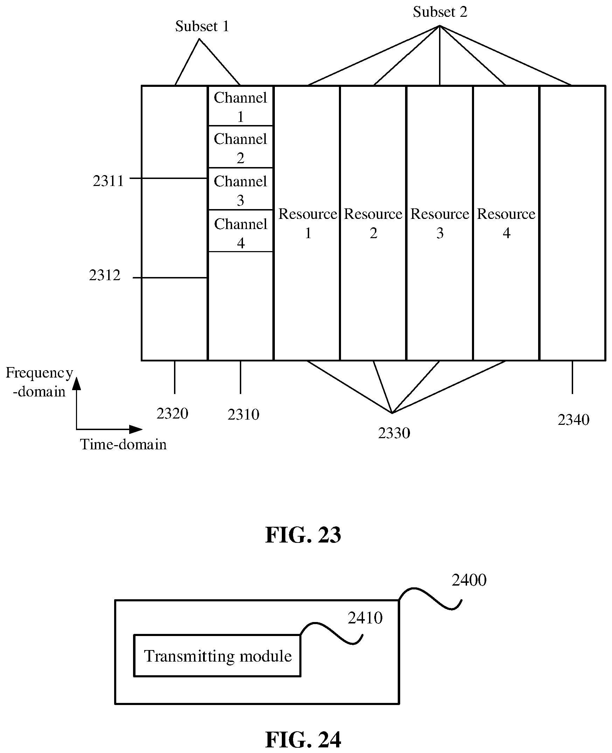

Exemplarily, as shown in FIG. 23, the first resource subset is subset 1, and the second resource subset is subset 2. The subset 1 includes the first time unit 2310 and the second time unit 2320. The complete frequency-domain resources corresponding to the first time unit 2310 include the first portion of frequency-domain resources 2311 and the second portion of frequency-domain resources 2312. The first portion of frequency-domain resources 2311 includes four sub-channels: channel 1, channel 2, channel 3, and channel 4. The subset 2 includes the first time-domain range 2330 and the second time-domain range 2340. The first time-domain range 2330 includes four resources: resource 1, resource 2, resource 3, and resource 4. The four sub-channels in the first time unit 2310 and the four resources within the first time-domain range 2330 have the one-to-one correspondence. Channel 1 is configured to transmit first information for reserving resource 1. Channel 2 is configured to transmit first information for reserving resource 2. Channel 3 is configured to transmit first information for reserving resource 3. Channel 4 is configured to transmit first information for reserving resource 4.

The resources in the same time unit are further divided, with the first portion of frequency-domain resources configured to transmit the first information and the second portion of frequency-domain resources configured to transmit information related to sidelink positioning other than the first information. Therefore, the utilization of resources in the first resource subset is improved.

In some embodiments, a number of bits of at least one of the following information items in the first information is determined based on a configuration of the second resource subset: a first information item, configured to indicate PRBs occupied by the SL PRS; a second information item, configured to indicate the repetition period of the SL PRS; a third information item, configured to indicate OFDM symbols occupied by the SL PRS; or a fourth information item, configured to indicate REs occupied by the SL PRS.

In some embodiments, the number of bits of the first information item is determined based on a number of PRBs included in the second resource subset and a frequency-domain resource granularity occupied by the SL PRS; and/or the number of bits of the second information item is determined based on a number of repetition periods allowed for the SL PRS in the second resource subset; and/or the number of bits of the third information item is determined based on a number of OFDM symbols included within a slot in the second resource subset and a minimum number of OFDM symbols allowed to be occupied by the SL PRS; and/or the number of bits of the fourth information item is determined based on a frequency-domain interval allowed for the SL PRS in the second resource subset.

It should be noted that the embodiments belong to the same concept as the embodiments described previously. For details not detailed in the embodiments, please refer to the previous embodiments, which are not repeated herein.

According to the technical solution in the embodiments of the application, the first information configured to indicate the transmission manner of the SL PRS is transmitted from the first terminal device to the second terminal device, so as to indicate the second terminal to receive the SL PRS. Therefore, the resource utilization efficiency on sidelink carriers is improved, and the performance of sidelink positioning and the sidelink communication system is enhanced.

Furthermore, there is provided a method for transmitting the first information and the SL PRS in the same resource pool, which is divided into two subsets: the first resource subset configured for transmitting the first information, and the second resource subset configured for transmitting the SL PRS. The resources configured for transmitting the first information in the first resource subset and the resources configured for transmitting the SL PRS in the second resource subset have a one-to-one correspondence. The first information does not need to indicate the time-frequency resources occupied by the SL PRS, and there is no need to perform resource exclusion on the resources in the second resource subset. Therefore, the reliability of sidelink communication is ensured, while the workload of the first terminal device transmitting the first information is reduced.

The following are apparatus embodiments of the disclosure, which may be configured to implement the method embodiments of the disclosure. For details not disclosed in the apparatus embodiments of the disclosure, please refer to the method embodiments of the disclosure.

Please refer to FIG. 24, which illustrates a block diagram of an apparatus for sidelink communication according to an embodiment of the disclosure. The apparatus has functions of implementing the above method examples for sidelink communication, and the functions may be implemented through hardware or by executing corresponding software through hardware. The apparatus may be the first terminal device introduced above, or may be disposed in the first terminal device. As shown in FIG. 24, the apparatus 2400 may include a transmitting module 2410.

The transmitting module 2410 is configured to transmit first information, herein the first information is configured to indicate a transmission manner of a sidelink positioning reference signal (SL PRS).

In some embodiments, the transmission manner of the SL PRS includes at least one of: a time-domain resource position of the SL PRS; a frequency-domain resource position of the SL PRS; a repetition period of the SL PRS; identification information of a transmitting terminal for the SL PRS; identification information of a receiving terminal for the SL PRS; or sequence information of the SL PRS.

In some embodiments, a resource pool configured for transmitting the first information is a first resource pool, a resource pool configured for transmitting the SL PRS is a second resource pool, and the first resource pool and the second resource pool are different resource pools.

In some embodiments, the first resource pool and the second resource pool occupy different time-domain resources; and/or the first resource pool and the second resource pool occupy different frequency-domain resources.

In some embodiments, a resource in the first resource pool and a first resource in the second resource pool have a mapping relationship; and/or a constraint condition is satisfied between a first time unit and a second time unit, the first time unit is a time unit where a resource for transmitting the first information is located, and the second time unit is a time unit where a first resource for transmitting the SL PRS is located.

In some embodiments, the constraint condition includes: a time interval the first time unit and the second time unit being greater than or equal to a minimum threshold; and/or the time interval between the first time unit and the second time unit being less than or equal to a maximum threshold.

In some embodiments, the maximum threshold is related to a priority of the SL PRS.

In some embodiments, the first information is further configured to indicate an index of the second resource pool.

In some embodiments, a number of bits of at least one of the following information items in the first information is determined based on a configuration of the second resource pool: a first information item, configured to indicate physical resource blocks (PRBs) occupied by the SL PRS; a second information item, configured to indicate the repetition period of the SL PRS; a third information item, configured to indicate orthogonal frequency division multiplexing (OFDM) symbols occupied by the SL PRS; or a fourth information item, configured to indicate resource elements (REs) occupied by the SL PRS.

In some embodiments, the number of bits of the first information item is determined based on a number of PRBs included in the second resource pool and a frequency-domain resource granularity occupied by the SL PRS; and/or the number of bits of the second information item is determined based on a number of repetition periods allowed for the SL PRS in the second resource pool; and/or the number of bits of the third information item is determined based on a number of OFDM symbols included within a slot in the second resource pool and a minimum number of OFDM symbols allowed to be occupied by the SL PRS; and/or the number of bits of the fourth information item is determined based on a frequency-domain RE interval allowed for the SL PRS in the second resource pool.

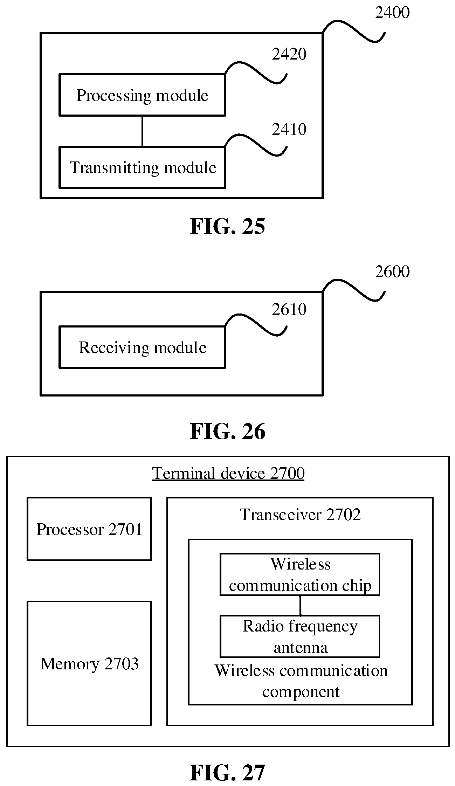

In some embodiments, as shown in FIG. 25, the apparatus 2400 further includes a processing module 2420.

The processing module 2420 is configured to: detect, within the first resource pool, information configured to indicate a transmission of the SL PRS transmitted by at least one other terminal device, and designate resources within a resource selection window in the second resource pool as a candidate resource set; exclude, from the candidate resource set, resources based on the information configured to indicate the transmission of the SL PRS transmitted by the at least one other terminal device, to obtain remaining resources in the candidate resource set; and select, from the remaining resources, the resource for transmitting the SL PRS.

In some embodiments, a resource pool configured for transmitting the first information and a resource pool configured for transmitting the SL PRS are a same resource pool.

In some embodiments, the resource pool includes a first resource subset and a second resource subset, the first resource subset is a resource subset configured for transmitting the first information, and the second resource subset is a resource subset configured for transmitting the SL PRS. Herein the first resource subset and the second resource subset occupy different time-domain resources in the resource pool, and/or the first resource subset and the second resource subset occupy different frequency-domain resources in the resource pool.

In some embodiments, the first information, transmitted using any resource in the first resource subset, includes an information item configured to indicate time-frequency resources occupied by the SL PRS in the second resource subset.

In some embodiments, for a first time unit belonging to the first resource subset, the first time unit includes N sub-channels, the N sub-channels and N SL PRS resources within a first time-domain range belonging to the second resource subset have a one-to-one correspondence. Herein the first information transmitted in an i-th sub-channel among the N sub-channels is configured to reserve an i-th SL PRS resource among the N SL PRS resources, N is an integer greater than 1, and i is a positive integer less than or equal to N.

In some embodiments, complete frequency-domain resources corresponding to the first time unit include a first portion of frequency-domain resources and a second portion of frequency-domain resources. The first portion of frequency-domain resources includes the N sub-channels. The second portion of frequency-domain resources is configured to transmit information related to sidelink positioning other than the first information.

In some embodiments, a number of bits of at least one of the following information items in the first information is determined based on a configuration of the second resource subset: a first information item, configured to indicate physical resource blocks (PRBs) occupied by the SL PRS; a second information item, configured to indicate the repetition period of the SL PRS; a third information item, configured to indicate orthogonal frequency division multiplexing (OFDM) symbols occupied by the SL PRS; or a fourth information item, configured to indicate resource elements (REs) occupied by the SL PRS.

In some embodiments, the number of bits of the first information item is determined based on a number of PRBs included in the second resource subset and a frequency-domain resource granularity occupied by the SL PRS; and/or the number of bits of the second information item is determined based on a number of repetition periods allowed for the SL PRS in the second resource subset; and/or the number of bits of the third information item is determined based on a number of OFDM symbols included within a slot in the second resource subset and a minimum number of OFDM symbols allowed to be occupied by the SL PRS; and/or the number of bits of the fourth information item is determined based on a frequency-domain interval allowed for the SL PRS in the second resource subset.

In some embodiments, the first information is carried by at least one of the following information: a media access control control element (MAC CE), or second-stage sidelink control information (2nd-stage-SCI).

In some embodiments, the first information is transmitted on at least one of the following channels: a physical sidelink control channel (PSCCH), or a physical sidelink shared channel (PSSCH).

According to the technical solution in the embodiments of the disclosure, the first information configured to indicate the transmission manner of the SL PRS is transmitted from the first terminal device to the second terminal device, so as to indicate the second terminal to receive the SL PRS. Therefore, the resource utilization efficiency on sidelink carriers is improved, and the performance of sidelink positioning and the sidelink communication system is enhanced.

Please refer to FIG. 26, which illustrates a block diagram of an apparatus for sidelink communication according to an embodiment of the disclosure. The apparatus has functions of implementing the above method examples for sidelink communication, and the functions may be implemented through hardware or by executing corresponding software through hardware. The apparatus may be the second terminal device introduced above, or may be disposed in the second terminal device. As shown in FIG. 26, the apparatus 2600 may include a receiving module 2610.

The receiving module 2610 is configured to receive first information, herein the first information is configured to indicate a transmission manner of a sidelink positioning reference signal (SL PRS).

In some embodiments, the transmission manner of the SL PRS includes at least one of: a time-domain resource position of the SL PRS; a frequency-domain resource position of the SL PRS; a repetition period of the SL PRS; identification information of a transmitting terminal for the SL PRS; identification information of a receiving terminal for the SL PRS; or sequence information of the SL PRS.

In some embodiments, a resource pool configured for transmitting the first information is a first resource pool, a resource pool configured for transmitting the SL PRS is a second resource pool, and the first resource pool and the second resource pool are different resource pools.

In some embodiments, the first resource pool and the second resource pool occupy different time-domain resources; and/or the first resource pool and the second resource pool occupy different frequency-domain resources.

In some embodiments, a resource in the first resource pool and a first resource in the second resource pool have a mapping relationship; and/or a constraint condition is satisfied between a first time unit and a second time unit, the first time unit is a time unit where a resource for transmitting the first information is located, and the second time unit is a time unit where a first resource for transmitting the SL PRS is located.

In some embodiments, the constraint condition includes: a time interval the first time unit and the second time unit being greater than or equal to a minimum threshold; and/or the time interval between the first time unit and the second time unit being less than or equal to a maximum threshold.

In some embodiments, the maximum threshold is related to a priority of the SL PRS.

In some embodiments, the first information is further configured to indicate an index of the second resource pool.

In some embodiments, a number of bits of at least one of the following information items in the first information is determined based on a configuration of the second resource pool: a first information item, configured to indicate physical resource blocks (PRBs) occupied by the SL PRS; a second information item, configured to indicate the repetition period of the SL PRS; a third information item, configured to indicate orthogonal frequency division multiplexing (OFDM) symbols occupied by the SL PRS; or a fourth information item, configured to indicate resource elements (REs) occupied by the SL PRS.

In some embodiments, the number of bits of the first information item is determined based on a number of PRBs included in the second resource pool and a frequency-domain resource granularity occupied by the SL PRS; and/or the number of bits of the second information item is determined based on a number of repetition periods allowed for the SL PRS in the second resource pool; and/or the number of bits of the third information item is determined based on a number of OFDM symbols included within a slot in the second resource pool and a minimum number of OFDM symbols allowed to be occupied by the SL PRS; and/or the number of bits of the fourth information item is determined based on a frequency-domain interval allowed for the SL PRS in the second resource pool.

In some embodiments, a transmission resource for the SL PRS is selected from remaining resources after excluding resources from a candidate resource set, and the candidate resource set is initialized as resources within a resource selection window in the second resource pool.

In some embodiments, a resource pool configured for transmitting the first information and a resource pool configured for transmitting the SL PRS are a same resource pool.

In some embodiments, the resource pool includes a first resource subset and a second resource subset, the first resource subset is a resource subset configured for transmitting the first information, and the second resource subset is a resource subset configured for transmitting the SL PRS. Herein the first resource subset and the second resource subset occupy different time-domain resources in the resource pool, and/or the first resource subset and the second resource subset occupy different frequency-domain resources in the resource pool.

In some embodiments, the first information, transmitted using any resource in the first resource subset, includes an information item configured to indicate time-frequency resources occupied by the SL PRS in the second resource subset.

In some embodiments, for a first time unit belonging to the first resource subset, the first time unit includes N sub-channels, the N sub-channels and N SL PRS resources within a first time-domain range belonging to the second resource subset have a one-to-one correspondence. Herein the first information transmitted in an i-th sub-channel among the N sub-channels is configured to reserve an i-th SL PRS resource among the N SL PRS resources, N is an integer greater than 1, and i is a positive integer less than or equal to N.

In some embodiments, complete frequency-domain resources corresponding to the first time unit include a first portion of frequency-domain resources and a second portion of frequency-domain resources. The first portion of frequency-domain resources includes the N sub-channels. The second portion of frequency-domain resources is configured to transmit information related to sidelink positioning other than the SL PRS.

In some embodiments, a number of bits of at least one of the following information items in the first information is determined based on a configuration of the second resource subset: a first information item, configured to indicate physical resource blocks (PRBs) occupied by the SL PRS; a second information item, configured to indicate the repetition period of the SL PRS; a third information item, configured to indicate orthogonal frequency division multiplexing (OFDM) symbols occupied by the SL PRS; or a fourth information item, configured to indicate resource elements (REs) occupied by the SL PRS.

In some embodiments, the number of bits of the first information item is determined based on a number of PRBs included in the second resource subset and a frequency-domain resource granularity occupied by the SL PRS; and/or the number of bits of the second information item is determined based on a number of repetition periods allowed for the SL PRS in the second resource subset; and/or the number of bits of the third information item is determined based on a number of OFDM symbols included within a slot in the second resource subset and a minimum number of OFDM symbols allowed to be occupied by the SL PRS; and/or the number of bits of the fourth information item is determined based on a frequency-domain interval allowed for the SL PRS in the second resource subset.

In some embodiments, the first information is carried by at least one of the following information: a media access control control element (MAC CE), or second-stage sidelink control information (2nd-stage-SCI).

In some embodiments, the first information is transmitted on at least one of the following channels: a physical sidelink control channel (PSCCH), or a physical sidelink shared channel (PSSCH).

According to the technical solution in the embodiments of the disclosure, the first information configured to indicate the transmission manner of the SL PRS is transmitted from the first terminal device to the second terminal device, so as to indicate the second terminal to receive the SL PRS. Therefore, the resource utilization efficiency on sidelink carriers is improved, and the performance of sidelink positioning and the sidelink communication system is enhanced.

Please refer to FIG. 27, which illustrates a schematic structural diagram of a terminal device according to an embodiment of the disclosure. The terminal device 2700 may include a processor 2701, a transceiver 2702, and a memory 2703. The processor 2701 is configured to perform the functions of the processing module 2420 mentioned above, and the transceiver 2702 is configured to implement the functions of the transmitting module 2410 and/or the receiving module 2610 mentioned above.

The processor 2701 includes one or more processing cores, and executes various functional applications and information processing by running software programs and modules. The processor 2701 is configured to perform operations executed by the terminal device in the above method embodiments, other than the transmitting operation and the receiving operation.

The transceiver 2702 may include a receiver and a transmitter. For example, the receiver and the transmitter may be implemented as the same wireless communication component, and the wireless communication component may include a wireless communication chip and a radio frequency antenna. The transceiver 2702 is configured to perform the transmitting operation and/or the receiving operation performed by the terminal device in the above method embodiments.

The memory 2703 may be connected to the processor 2701 and transceiver 2702.

The memory 2703 may be configured to store computer programs executed by the processor. The processor 2701 is configured to execute the computer programs to implement the various operations in the above method embodiments.

In an exemplary embodiment, when the terminal device is the first terminal device, the processor 2701 is configured to transmit the first information, herein the first information is configured to indicate the transmission manner of the SL PRS.

In another exemplary embodiment, when the terminal device is the second terminal device, the processor 2701 is configured to receive the first information, herein the first information is configured to indicate the transmission manner of the SL PRS.

For details not elaborated in the embodiment, please refer to the embodiments described above, which are not repeated herein.

Furthermore, the memory may be implemented by any type of volatile or non-volatile storage device or a combination thereof. The volatile or non-volatile storage device includes, but not limited to: a magnetic disk or optical disk, an electrically erasable programmable read-only memory, an erasable programmable read-only memory, a static random access memory, a read-only memory, a magnetic storage, a flash memory, and a programmable read-only memory.

According to an embodiment of the disclosure, there is further provided a computer-readable storage medium, having stored thereon a computer program. The computer program is configured to be executed by a processor to implement the above method for sidelink communication. Optionally, the computer-readable storage medium may include: a read-only memory (ROM), a random-access memory (RAM), a solid state drive (SSD), or an optical disc, etc. Herein the random access memory may include a resistance random access memory (ReRAM) and a dynamic random access memory (DRAM).

According to an embodiment of the disclosure, there is further provided a chip, including a programmable logic circuit and/or a program instruction, and the chip, when is running, is configured to implement the above method for sidelink communication.

According to an embodiment of the disclosure, there is further provided a computer program product, including a computer instruction stored in a computer-readable storage medium, and a processor reads and executes the computer instruction from the computer-readable storage medium to implement the above method for sidelink communication.

It should be understood that the expression "indicate" mentioned in the embodiments of the disclosure may be a direct indication or an indirect indication, or may mean that there is an association relationship. For example, A indicates B, which may mean that A indicates B directly (e.g., B may be obtained through A), or may mean that A indicates B indirectly (e.g., A indicates C, and B may be obtained through C), or may mean that there is an association relationship between A and B.

In the description of the embodiments of the disclosure, the term "corresponding" may indicate that there is a direct correspondence relationship or an indirect correspondence relationship between the two, or may indicate that there is an association relationship between the two, or may indicate that there is a relationship of indicating and being indicated, configuring and being configured, and the like.

In some embodiments of the disclosure, "predefined" may be implemented by pre-storing corresponding codes, tables, or other ways that may be configured to indicate relevant information in devices (e.g., terminal devices and network devices), and the specific implementation is not limited in the disclosure. For example, "predefined" may refer to those defined in the protocol.

In some embodiments of the disclosure, the term "protocol" may refer to standard protocols in the field of communications, which may include LTE protocols, NR protocols, and related protocols applied in future communication systems. The disclosure does not limit this aspect.

The term "multiple" mentioned in the disclosure refers to two or more. The term "and/or" is an association relationship describing association objects, and indicates that there may be three relationships. For example, A and/or B may indicate three cases: existence of A alone, existence of A and B simultaneously, and existence of B alone. The character "/" generally indicates that association objects before and after are in an "or" relationship.

The term "greater than or equal to" mentioned in the disclosure may indicate either "greater than or equal to" or "greater than", and the term "less than or equal to" may indicate either "less than or equal to" or "less than".

Furthermore, the operation numbers described in the disclosure only exemplarily shows one possible order of execution for the operations. In some other embodiments, the above operations may be executed without following the order indicated by the numbers. For example, two operations with different numbers are executed simultaneously, or two operations with different numbers are executed in the opposite order shown in the diagram. The embodiments of the disclosure do not limit the order of execution for the operations.

It should be realized by those skilled in the art that in one or more examples described above, the functions described in the embodiments of the disclosure may be implemented using hardware, software, firmware, or any combination thereof. When implemented using software, these functions may be stored in a computer-readable medium or transmitted as one or more instructions or codes on a computer-readable medium. Computer-readable media include computer storage media and communication media, and the communication media include any medium that facilitates the transmission of computer programs from one location to another. Storage media may be any available medium accessible by a general-purpose or specialized computer.

The above description is only exemplary embodiments of the disclosure and is not intended to limit the disclosure. Any modifications, equivalent substitutions, improvements, etc. made within the spirit and principles of the disclosure shall be included within the scope of protection of the disclosure.

**Claims**

1. A method for sidelink communication, executed by a first terminal device, and comprising:
transmitting first information, wherein the first information is configured to indicate a transmission manner of a sidelink positioning reference signal (SL PRS).

2. The method of claim 1, wherein the transmission manner of the SL PRS comprises at least one of:

    a time-domain resource position of the SL PRS;
    a frequency-domain resource position of the SL PRS;
    a repetition period of the SL PRS;

identification information of a transmitting terminal for the SL PRS;
identification information of a receiving terminal for the SL PRS; or
sequence information of the SL PRS.

3. The method of claim 1 or 2, wherein a resource pool configured for transmitting the first information is a first resource pool, a resource pool configured for transmitting the SL PRS is a second resource pool, and the first resource pool and the second resource pool are different resource pools.

4. The method of claim 3, wherein the first resource pool and the second resource pool occupy different time-domain resources; and/or
the first resource pool and the second resource pool occupy different frequency-domain resources.

5. The method of claim 3 or 4, wherein a resource in the first resource pool and a first resource in the second resource pool have a mapping relationship; and/or
a constraint condition is satisfied between a first time unit and a second time unit, the first time unit is a time unit where a resource for transmitting the first information is located, and the second time unit is a time unit where a first resource for transmitting the SL PRS is located.

6. The method of claim 5, wherein the constraint condition comprises: a time interval between the first time unit and the second time unit being greater than or equal to a minimum threshold; and/or the time interval between the first time unit and the second time unit being less than or equal to a maximum threshold.

7. The method of claim 6, wherein the maximum threshold is related to a priority of the SL PRS.

8. The method of any one of claims 3 to 7, wherein the first information is further configured to indicate an index of the second resource pool.

9. The method of any one of claims 3 to 8, wherein a number of bits of at least one of the following information items in the first information is determined based on a configuration of the second resource pool:

a first information item, configured to indicate physical resource blocks (PRBs) occupied by the SL PRS;
a second information item, configured to indicate the repetition period of the SL PRS;
a third information item, configured to indicate orthogonal frequency division multiplexing (OFDM) symbols occupied by the SL PRS; or
a fourth information item, configured to indicate resource elements (REs) occupied by the SL PRS.

10. The method of claim 9, wherein the number of bits of the first information item is determined based on a number of PRBs comprised in the second resource pool and a frequency-domain resource granularity occupied by the SL PRS; and/or

the number of bits of the second information item is determined based on a number of repetition periods allowed for the SL PRS in the second resource pool; and/or
the number of bits of the third information item is determined based on a number of OFDM symbols comprised within a slot in the second resource pool and a minimum number of OFDM symbols allowed to be occupied by the SL PRS; and/or
the number of bits of the fourth information item is determined based on a frequency-domain RE interval allowed for the SL PRS in the second resource pool.

11. The method of any one of claims 3 to 10, wherein the method further comprises:

detecting, within the first resource pool, information configured to indicate a transmission of the SL PRS transmitted by other terminal device, and designating resources within a resource selection window in the second resource pool as a candidate resource set;
excluding, from the candidate resource set, resources based on the information configured to indicate the transmission of the SL PRS transmitted by the other terminal device, to obtain remaining resources in the candidate resource set; and
selecting, from the remaining resources, a transmission resource for the SL PRS.

12. The method of claim 1 or 2, wherein a resource pool configured for transmitting the first information and a resource pool configured for transmitting the SL PRS are a same resource pool.

13. The method of claim 12, wherein the resource pool comprises a first resource subset and a second resource subset, the first resource subset is a resource subset configured for transmitting the first information, and the second resource subset is a resource subset configured for transmitting the SL PRS; wherein the first resource subset and the second resource subset occupy different time-domain resources in the resource pool, and/or the first resource subset and the second resource subset occupy different frequency-domain resources in the resource pool.

14. The method of claim 13, wherein the first information, transmitted using any resource in the first resource subset, comprises an information item configured to indicate time-frequency resources occupied by the SL PRS in the second resource subset.

15. The method of claim 13, wherein for a first time unit belonging to the first resource subset, the first time unit comprises N sub-channels, the N sub-channels and N SL PRS resources within a first time-domain range belonging to the second resource subset having a one-to-one correspondence; wherein the first information transmitted in an i-th sub-channel among the N sub-channels is configured to reserve an i-th SL PRS resource among the N SL PRS resources, N is an integer greater than 1, and i is a positive integer less than or equal to N.

16. The method of claim 15, wherein complete frequency-domain resources corresponding to the first time unit comprise a first portion of frequency-domain resources and a second portion of frequency-domain resources;

    the first portion of frequency-domain resources comprises the N sub-channels; and
    the second portion of frequency-domain resources is configured to transmit information related to sidelink positioning other than the first information.

17. The method of any one of claims 13 to 16, wherein a number of bits of at least one of the following information items in the first information is determined based on a configuration of the second resource subset:

    a first information item, configured to indicate physical resource blocks (PRBs) occupied by the SL PRS;
    a second information item, configured to indicate the repetition period of the SL PRS;
    a third information item, configured to indicate orthogonal frequency division multiplexing (OFDM) symbols occupied by the SL PRS; or
    a fourth information item, configured to indicate resource elements (REs) occupied by the SL PRS.

18. The method of claim 17, wherein the number of bits of the first information item is determined based on a number of PRBs comprised in the second resource subset and a frequency-domain resource granularity occupied by the SL PRS; and/or

    the number of bits of the second information item is determined based on a number of repetition periods allowed for the SL PRS in the second resource subset; and/or
    the number of bits of the third information item is determined based on a number of OFDM symbols comprised within a slot in the second resource subset and a minimum number of OFDM symbols allowed to be occupied by the SL PRS; and/or
    the number of bits of the fourth information item is determined based on a frequency-domain interval allowed for the SL PRS in the second resource subset.

19. The method of any one of claims 1 to 18, wherein the first information is carried by at least one of the following information: a media access control control element (MAC CE), or second-stage sidelink control information (2nd-stage-SCI).

20. The method of any one of claims 1 to 19, wherein the first information is transmitted on at least one of the following channels: a physical sidelink control channel (PSCCH), or a physical sidelink shared channel (PSSCH).

21. A method for sidelink communication, executed by a second terminal device, and comprising:
    receiving first information, wherein the first information is configured to indicate a transmission manner of a sidelink positioning reference signal (SL PRS).

22. The method of claim 21, wherein the transmission manner of the SL PRS comprises at least one of:

   a time-domain resource position of the SL PRS;
   a frequency-domain resource position of the SL PRS;
   a repetition period of the SL PRS;
   identification information of a transmitting terminal for the SL PRS;
   identification information of a receiving terminal for the SL PRS; or
   sequence information of the SL PRS.

23. The method of claim 21 or 22, wherein a resource pool configured for transmitting the first information is a first resource pool, a resource pool configured for transmitting the SL PRS is a second resource pool, and the first resource pool and the second resource pool are different resource pools.

24. The method of claim 23, wherein the first resource pool and the second resource pool occupy different time-domain resources; and/or
   the first resource pool and the second resource pool occupy different frequency-domain resources.

25. The method of claim 23 or 24, wherein a resource in the first resource pool and a first resource in the second resource pool have a mapping relationship; and/or
   a constraint condition is satisfied between a first time unit and a second time unit, the first time unit is a time unit where a resource for transmitting the first information is located, and the second time unit is a time unit where a first resource for transmitting the SL PRS is located.

26. The method of claim 25, wherein the constraint condition comprises: a time interval between the first time unit and the second time unit being greater than or equal to a minimum threshold; and/or the time interval between the first time unit and the second time unit being less than or equal to a maximum threshold.

27. The method of claim 26, wherein the maximum threshold is related to a priority of the SL PRS.

28. The method of any one of claims 23 to 27, wherein the first information is further configured to indicate an index of the second resource pool.

29. The method of any one of claims 23 to 28, wherein a number of bits of at least one of the following information items in the first information is determined based on a configuration of the second resource pool:

   a first information item, configured to indicate physical resource blocks (PRBs) occupied by the SL PRS;
   a second information item, configured to indicate the repetition period of the SL PRS;
   a third information item, configured to indicate orthogonal frequency division multiplexing (OFDM) symbols occupied by the SL PRS; or
   a fourth information item, configured to indicate resource elements (REs) occupied by the SL PRS.

30. The method of claim 29, wherein the number of bits of the first information item is determined based on a number of PRBs comprised in the second resource pool and a frequency-domain resource granularity occupied by the SL PRS; and/or

   the number of bits of the second information item is determined based on a number of repetition periods allowed for the SL PRS in the second resource pool; and/or
   the number of bits of the third information item is determined based on a number of OFDM symbols comprised within a slot in the second resource pool and a minimum number of OFDM symbols allowed to be occupied by the SL PRS; and/or
   the number of bits of the fourth information item is determined based on a frequency-domain interval allowed for the SL PRS in the second resource pool.

31. The method of any one of claims 23 to 30, wherein a transmission resource for the SL PRS is selected from remaining resources after excluding resources from a candidate resource set, and the candidate resource set is initialized as resources within a resource selection window in the second resource pool.

32. The method of claim 21 or 22, wherein a resource pool configured for transmitting the first information and a resource pool configured for transmitting the SL PRS are a same resource pool.

33. The method of claim 32, wherein the resource pool comprises a first resource subset and a second resource subset, the first resource subset is a resource subset configured for transmitting the first information, and the second resource subset is a resource subset configured for transmitting the SL PRS; wherein the first resource subset and the second resource subset occupy different time-domain resources in the resource pool, and/or the first resource subset and the second resource subset occupy different frequency-domain resources in the resource pool.

34. The method of claim 33, wherein the first information, transmitted using any resource in the first resource subset, comprises an information item configured to indicate time-frequency resources occupied by the SL PRS in the second resource subset.

35. The method of claim 33, wherein for a first time unit belonging to the first resource subset, the first time unit comprises N sub-channels, the N sub-channels and N SL PRS resources within a first time-domain range belonging to the second resource subset having a one-to-one correspondence; wherein the first information transmitted in an i-th sub-channel among the N sub-channels is configured to reserve an i-th SL PRS resource among the N SL PRS resources, N is an integer greater than 1, and i is a positive integer less than or equal to N.

36. The method of claim 35, wherein complete frequency-domain resources corresponding to the first time unit comprise a first portion of frequency-domain resources and a second portion of frequency-domain resources;

the first portion of frequency-domain resources comprises the N sub-channels; and
the second portion of frequency-domain resources is configured to transmit information related to sidelink positioning other than the SL PRS.

37. The method of any one of claims 33 to 36, wherein a number of bits of at least one of the following information items in the first information is determined based on a configuration of the second resource subset:

a first information item, configured to indicate physical resource blocks (PRBs) occupied by the SL PRS;
a second information item, configured to indicate the repetition period of the SL PRS;
a third information item, configured to indicate orthogonal frequency division multiplexing (OFDM) symbols occupied by the SL PRS; or
a fourth information item, configured to indicate resource elements (REs) occupied by the SL PRS.

38. The method of claim 37, wherein the number of bits of the first information item is determined based on a number of PRBs comprised in the second resource subset and a frequency-domain resource granularity occupied by the SL PRS; and/or

the number of bits of the second information item is determined based on a number of repetition periods allowed for the SL PRS in the second resource subset; and/or
the number of bits of the third information item is determined based on a number of OFDM symbols comprised within a slot in the second resource subset and a minimum number of OFDM symbols allowed to be occupied by the SL PRS; and/or
the number of bits of the fourth information item is determined based on a frequency-domain interval allowed for the SL PRS in the second resource subset.

39. The method of any one of claims 21 to 38, wherein the first information is carried by at least one of the following information: a media access control control element (MAC CE), or second-stage sidelink control information (2nd-stage-SCI).

40. The method of any one of claims 21 to 39, wherein the first information is transmitted on at least one of the following channels: a physical sidelink control channel (PSCCH), or a physical sidelink shared channel (PSSCH).

41. An apparatus for sidelink communication, comprising:
a transmitting module, configured to transmit first information, wherein the first information is configured to indicate a transmission manner of a sidelink positioning reference signal (SL PRS).

42. The apparatus of claim 41, wherein the transmission manner of the SL PRS comprises at least one of:

a time-domain resource position of the SL PRS;
a frequency-domain resource position of the SL PRS;
a repetition period of the SL PRS;
identification information of a transmitting terminal for the SL PRS;
identification information of a receiving terminal for the SL PRS; or
sequence information of the SL PRS.

43. The apparatus of claim 41 or 42, wherein a resource pool configured for transmitting the first information is a first resource pool, a resource pool configured for transmitting the SL PRS is a second resource pool, and the first resource pool and the second resource pool are different resource pools.

44. The apparatus of claim 43, wherein the first resource pool and the second resource pool occupy different time-domain resources; and/or
the first resource pool and the second resource pool occupy different frequency-domain resources.

45. The apparatus of claim 43 or 44, wherein a resource in the first resource pool and a first resource in the second resource pool have a mapping relationship; and/or
a constraint condition is satisfied between a first time unit and a second time unit, the first time unit is a time unit where a resource for transmitting the first information is located, and the second time unit is a time unit where a first resource for transmitting the SL PRS is located.

46. The apparatus of claim 45, wherein the constraint condition comprises: a time interval the first time unit and the second time unit being greater than or equal to a minimum threshold; and/or the time interval between the first time unit and the second time unit being less than or equal to a maximum threshold.

47. The apparatus of claim 46, wherein the maximum threshold is related to a priority of the SL PRS.

48. The apparatus of any one of claims 43 to 47, wherein the first information is further configured to indicate an index of the second resource pool.

49. The apparatus of any one of claims 43 to 48, wherein a number of bits of at least one of the following information items in the first information is determined based on a configuration of the second resource pool:

a first information item, configured to indicate physical resource blocks (PRBs) occupied by the SL PRS;
a second information item, configured to indicate the repetition period of the SL PRS;
a third information item, configured to indicate orthogonal frequency division multiplexing (OFDM) symbols occupied by the SL PRS; or
a fourth information item, configured to indicate resource elements (REs) occupied by the SL PRS.

50. The apparatus of claim 49, wherein the number of bits of the first information item is determined based on a number of PRBs comprised in the second resource pool and a frequency-domain resource granularity occupied by the SL PRS; and/or

the number of bits of the second information item is determined based on a number of repetition periods allowed for the SL PRS in the second resource pool; and/or
the number of bits of the third information item is determined based on a number of OFDM symbols comprised within a slot in the second resource pool and a minimum number of OFDM symbols allowed to be occupied by the SL PRS; and/or
the number of bits of the fourth information item is determined based on a frequency-domain RE interval allowed for the SL PRS in the second resource pool.

51. The apparatus of any one of claims 43 to 50, wherein the apparatus further comprises a processing module, configured to:

detect, within the first resource pool, information configured to indicate a transmission of the SL PRS transmitted by other terminal device, and designate resources within a resource selection window in the second resource pool as a candidate resource set;
exclude, from the candidate resource set, resources based on the information configured to indicate the transmission of the SL PRS transmitted by the other terminal device, to obtain remaining resources in the candidate resource set; and

select, from the remaining resources, a transmission resource for the SL PRS.

52. The apparatus of claim 41 or 42, wherein a resource pool configured for transmitting the first information and a resource pool configured for transmitting the SL PRS are a same resource pool.

53. The apparatus of claim 52, wherein the resource pool comprises a first resource subset and a second resource subset, the first resource subset is a resource subset configured for transmitting the first information, and the second resource subset is a resource subset configured for transmitting the SL PRS; wherein the first resource subset and the second resource subset occupy different time-domain resources in the resource pool, and/or the first resource subset and the second resource subset occupy different frequency-domain resources in the resource pool.

54. The apparatus of claim 53, wherein the first information, transmitted using any resource in the first resource subset, comprises an information item configured to indicate time-frequency resources occupied by the SL PRS in the second resource subset.

55. The apparatus of claim 53, wherein for a first time unit belonging to the first resource subset, the first time unit comprises N sub-channels, the N sub-channels and N SL PRS resources within a first time-domain range belonging to the second resource subset having a one-to-one correspondence; wherein the first information transmitted in an i-th sub-channel among the N sub-channels is configured to reserve an i-th SL PRS resource among the N SL PRS resources, N is an integer greater than 1, and i is a positive integer less than or equal to N.

56. The apparatus of claim 55, wherein complete frequency-domain resources corresponding to the first time unit comprise a first portion of frequency-domain resources and a second portion of frequency-domain resources;

the first portion of frequency-domain resources comprises the N sub-channels; and
the second portion of frequency-domain resources is configured to transmit information related to sidelink positioning other than the first information.

57. The apparatus of any one of claims 53 to 56, wherein a number of bits of at least one of the following information items in the first information is determined based on a configuration of the second resource subset:

a first information item, configured to indicate physical resource blocks (PRBs) occupied by the SL PRS;
a second information item, configured to indicate the repetition period of the SL PRS;
a third information item, configured to indicate orthogonal frequency division multiplexing (OFDM) symbols occupied by the SL PRS; or
a fourth information item, configured to indicate resource elements (REs) occupied by the SL PRS.

58. The apparatus of claim 57, wherein the number of bits of the first information item is determined based on a number of PRBs comprised in the second resource subset and a frequency-domain resource granularity occupied by the SL PRS; and/or

the number of bits of the second information item is determined based on a number of repetition periods allowed for the SL PRS in the second resource subset; and/or
the number of bits of the third information item is determined based on a number of OFDM symbols comprised within a slot in the second resource subset and a minimum number of OFDM symbols allowed to be occupied by the SL PRS; and/or
the number of bits of the fourth information item is determined based on a frequency-domain interval allowed for the SL PRS in the second resource subset.

59. The apparatus of any one of claims 41 to 58, wherein the first information is carried by at least one of the following information: a media access control control element (MAC CE), or second-stage sidelink control information (2nd-stage-SCI).

60. The apparatus of any one of claims 41 to 59, wherein the first information is transmitted on at least one of the following channels: a physical sidelink control channel (PSCCH), or a physical sidelink shared channel (PSSCH).

**61.** An apparatus for sidelink communication, comprising:

a receiving module, configured to receive first information, wherein the first information is configured to indicate a transmission manner of a sidelink positioning reference signal (SL PRS).

**62.** The apparatus of claim 61, wherein the transmission manner of the SL PRS comprises at least one of:

a time-domain resource position of the SL PRS;
a frequency-domain resource position of the SL PRS;
a repetition period of the SL PRS;
identification information of a transmitting terminal for the SL PRS;
identification information of a receiving terminal for the SL PRS; or
sequence information of the SL PRS.

**63.** The apparatus of claim 61 or 62, wherein a resource pool configured for transmitting the first information is a first resource pool, a resource pool configured for transmitting the SL PRS is a second resource pool, and the first resource pool and the second resource pool are different resource pools.

**64.** The apparatus of claim 63, wherein the first resource pool and the second resource pool occupy different time-domain resources; and/or

the first resource pool and the second resource pool occupy different frequency-domain resources.

**65.** The apparatus of claim 63 or 64, wherein a resource in the first resource pool and a first resource in the second resource pool have a mapping relationship; and/or

a constraint condition is satisfied between a first time unit and a second time unit, the first time unit is a time unit where a resource for transmitting the first information is located, and the second time unit is a time unit where a first resource for transmitting the SL PRS is located.

**66.** The apparatus of claim 65, wherein the constraint condition comprises: a time interval the first time unit and the second time unit being greater than or equal to a minimum threshold; and/or the time interval between the first time unit and the second time unit being less than or equal to a maximum threshold.

**67.** The apparatus of claim 66, wherein the maximum threshold is related to a priority of the SL PRS.

**68.** The apparatus of any one of claims 63 to 67, wherein the first information is further configured to indicate an index of the second resource pool.

**69.** The apparatus of any one of claims 63 to 68, wherein a number of bits of at least one of the following information items in the first information is determined based on a configuration of the second resource pool:

a first information item, configured to indicate physical resource blocks (PRBs) occupied by the SL PRS;
a second information item, configured to indicate the repetition period of the SL PRS;
a third information item, configured to indicate orthogonal frequency division multiplexing (OFDM) symbols occupied by the SL PRS; or
a fourth information item, configured to indicate resource elements (REs) occupied by the SL PRS.

**70.** The apparatus of claim 69, wherein the number of bits of the first information item is determined based on a number of PRBs comprised in the second resource pool and a frequency-domain resource granularity occupied by the SL PRS; and/or

the number of bits of the second information item is determined based on a number of repetition periods allowed for the SL PRS in the second resource pool; and/or
the number of bits of the third information item is determined based on a number of OFDM symbols comprised within a slot in the second resource pool and a minimum number of OFDM symbols allowed to be occupied by the SL PRS; and/or
the number of bits of the fourth information item is determined based on a frequency-domain interval allowed for the SL PRS in the second resource pool.

**71.** The apparatus of any one of claims 63 to 70, wherein a transmission resource for the SL PRS is selected from remaining resources after excluding resources from a candidate resource set, and the candidate resource set is initialized as resources within a resource selection window in the second resource pool.

72. The apparatus of claim 61 or 62, wherein a resource pool configured for transmitting the first information and a resource pool configured for transmitting the SL PRS are a same resource pool.

73. The apparatus of claim 72, wherein the resource pool comprises a first resource subset and a second resource subset, the first resource subset is a resource subset configured for transmitting the first information, and the second resource subset is a resource subset configured for transmitting the SL PRS; wherein the first resource subset and the second resource subset occupy different time-domain resources in the resource pool, and/or the first resource subset and the second resource subset occupy different frequency-domain resources in the resource pool.

74. The apparatus of claim 73, wherein the first information, transmitted using any resource in the first resource subset, comprises an information item configured to indicate time-frequency resources occupied by the SL PRS in the second resource subset.

75. The apparatus of claim 73, wherein for a first time unit belonging to the first resource subset, the first time unit comprises N sub-channels, the N sub-channels and N SL PRS resources within a first time-domain range belonging to the second resource subset having a one-to-one correspondence; wherein the first information transmitted in an i-th sub-channel among the N sub-channels is configured to reserve an i-th SL PRS resource among the N SL PRS resources, N is an integer greater than 1, and i is a positive integer less than or equal to N.

76. The apparatus of claim 75, wherein complete frequency-domain resources corresponding to the first time unit comprise a first portion of frequency-domain resources and a second portion of frequency-domain resources;

the first portion of frequency-domain resources comprises the N sub-channels; and
the second portion of frequency-domain resources is configured to transmit information related to sidelink positioning other than the SL PRS.

77. The apparatus of any one of claims 73 to 76, wherein a number of bits of at least one of the following information items in the first information is determined based on a configuration of the second resource subset:

a first information item, configured to indicate physical resource blocks (PRBs) occupied by the SL PRS;
a second information item, configured to indicate the repetition period of the SL PRS;
a third information item, configured to indicate orthogonal frequency division multiplexing (OFDM) symbols occupied by the SL PRS; or
a fourth information item, configured to indicate resource elements (REs) occupied by the SL PRS.

78. The apparatus of claim 77, wherein the number of bits of the first information item is determined based on a number of PRBs comprised in the second resource subset and a frequency-domain resource granularity occupied by the SL PRS; and/or

the number of bits of the second information item is determined based on a number of repetition periods allowed for the SL PRS in the second resource subset; and/or
the number of bits of the third information item is determined based on a number of OFDM symbols comprised within a slot in the second resource subset and a minimum number of OFDM symbols allowed to be occupied by the SL PRS; and/or
the number of bits of the fourth information item is determined based on a frequency-domain interval allowed for the SL PRS in the second resource subset.

79. The apparatus of any one of claims 61 to 78, wherein the first information is carried by at least one of the following information: a media access control control element (MAC CE), or second-stage sidelink control information (2nd-stage-SCI).

80. The apparatus of any one of claims 61 to 79, wherein the first information is transmitted on at least one of the following channels: a physical sidelink control channel (PSCCH), or a physical sidelink shared channel (PSSCH).

81. A terminal device, comprising a processor and a memory having stored thereon a computer program, and the processor executing the computer program to implement the method of any one of claims 1 to 20, or to implement the method of any one of claims 21 to 40.

82. A computer-readable storage medium, having stored thereon a computer program, and the computer program configured to be executed by a processor to implement the method of any one of claims 1 to 20, or to implement the method of any one of claims 21 to 40.

83. A chip, comprising a programmable logic circuit and/or a program instruction, and the chip, when is running, configured to implement the method of any one of claims 1 to 20, or to implement the method of any one of claims 21 to 40.

84. A computer program product, comprising a computer program stored in a computer-readable storage medium, and a processor reading and executing the computer program from the computer-readable storage medium to implement the method of any one of claims 1 to 20, or to implement the method of any one of claims 21 to 40.

**FIG. 1**

**FIG. 2**

**FIG. 3**

**FIG. 4**

**FIG. 5**

Multicast group

**FIG. 6**

**FIG. 7**

**FIG. 8**

DMRS     DMRS     DMRS     GP     PSFCH   GP

AGC     PSCCH     PSSCH     AGC for
                                                             PSFCH
                                                             reception

**FIG. 9**

                PSCCH

AGC DMRS     DMRS     DMRS     DMRS     GAP

0    1    2    3    4    5    6    7    8    9    10    11    12    13

**FIG. 10**

RE#0   RE#1   RE#2   RE#3   RE#4   RE#5   RE#6   RE#7   RE#8   RE#9   RE#10 RE#11

Port 0/      Port 0/      Port 0/      Port 0/      Port 0/      Port 0/
Port 1      Port 1      Port 1      Port 1      Port 1      Port 1

**FIG. 11**

| First terminal device | 1210,Transmit first information, herein the first information is configured to indicate a transmission manner of an SL PRS | Second terminal device |
|---|---|---|

**FIG. 12**

UE2    UE3

UE1
UE4

**FIG. 13**

UE4
UE2        UE3

UE6    UE5

UE1

**FIG. 14**

UE2        UE3

UE6

UE1

UE5

UE4

**FIG. 15**

SL PRS

Resource
Pool 1

Resource
Pool 2

FIG. 16

Resource
Pool 1

Resource
Pool 2

Resource
Pool 3

Frequency
-domain

Time-domain

FIG. 17

Resource
Pool 1

Resource
Pool 2

10

11

21

20

Frequency
-domain

Time-domain

FIG. 18

Information 1

Resource Pool 1

Information 2

Frequency -domain

Time-domain

Resource Pool 2    Resource Pool 3

Resource 2

1910

Resource 1

**FIG. 19**

| Subset 4 | Subset 3 |
|----------|----------|
| Subset 1 | Subset 2 |

Frequency -domain

Time-domain

**FIG. 20**

Subset 1

SL PRS

Subset 2

**FIG. 21**

**FIG. 22**

Subset 1

Subset 2

| | Channel 1 | Resource 1 | Resource 2 | Resource 3 | Resource 4 | |
|---|---|---|---|---|---|---|
| | Channel 2 | | | | | |
| 2311 | Channel 3 | | | | | |
| | Channel 4 | | | | | |
| 2312 | | | | | | |

Frequency-domain

Time-domain

2320    2310

2330

2340

**FIG. 23**

2400

2410

| Transmitting module |
|---|

**FIG. 24**

2400

2420

Processing module

2410

Transmitting module

**FIG. 25**

2600

2610

Receiving module

**FIG. 26**

Terminal device 2700

Processor 2701

Transceiver 2702

Wireless communication chip

Radio frequency antenna

Wireless communication component

Memory 2703

**FIG. 27**

## INTERNATIONAL SEARCH REPORT

International application No.

**PCT/CN2022/123348**

| A. | CLASSIFICATION OF SUBJECT MATTER |
|---|---|

H04L5/00(2006.01)i;H04W64/00(2009.01)i;H04W72/04(2023.01)i

According to International Patent Classification (IPC) or to both national classification and IPC

| B. | FIELDS SEARCHED |
|---|---|

Minimum documentation searched (classification system followed by classification symbols)

H04L H04W

Documentation searched other than minimum documentation to the extent that such documents are included in the fields searched

Electronic data base consulted during the international search (name of data base and, where practicable, search terms used)

CNTXT; ENTXTC; ENTXT; VEN; 3GPP: 侧链路, 直行, 直通, 侧行, 定位参考信号, 定位, 配置, 指示, sidelink+, PRS, SL PRS, SL-PRS, position+, configurat+, indicat+

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2021297206 A1 (QUALCOMM INC.) 23 September 2021 (2021-09-23) claims 1-88, and description, paragraphs [0103]-[0221], and figures 1-14 | 1-84 |
| X | WO 2022062891 A1 (SPREADTRUM COMMUNICATIONS (SHANGHAI) CO., LTD.) 31 March 2022 (2022-03-31) description, pages 1-2 and 5-9, and figures 1-6 | 1-84 |
| X | NOKIA et al. "R1-2203129 Potential solutions for SL positioning" *3GPP TSG RAN WG1 #109-e*, 29 April 2022 (2022-04-29), section 2 | 1-84 |
| A | CN 113079579 A (DATANG MOBILE COMMUNICATIONS EQUIPMENT CO., LTD.) 06 July 2021 (2021-07-06) entire document | 1-84 |
| A | CN 111436031 A (ZTE CORP.) 21 July 2020 (2020-07-21) entire document | 1-84 |
| A | CN 114830697 A (GUANGDONG OPPO MOBILE COMMUNICATIONS CO., LTD.) 29 July 2022 (2022-07-29) entire document | 1-84 |

☑ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 May 2023** | **30 May 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**EP 4 583 442 A1**

## INTERNATIONAL SEARCH REPORT

International application No.

**PCT/CN2022/123348**

### C. DOCUMENTS CONSIDERED TO BE RELEVANT

| Category* | Citation of document, with indication, where appropriate, of the relevant passages | Relevant to claim No. |
|---|---|---|
| A | WO 2021121058 A1 (DATANG MOBILE COMMUNICATIONS EQUIPMENT CO., LTD.) 24 June 2021 (2021-06-24)<br>entire document | 1-84 |
| A | WO 2021240478 A1 (LENOVO SINGAPORE PTE LTD.) 02 December 2021 (2021-12-02)<br>entire document | 1-84 |
| A | WO 2022068836 A1 (SPREADTRUM COMMUNICATIONS (SHANGHAI) CO., LTD.) 07 April 2022 (2022-04-07)<br>entire document | 1-84 |
| A | WO 2022170512 A1 (NOKIA SHANGHAI BELL CO., LTD. et al.) 18 August 2022 (2022-08-18)<br>entire document | 1-84 |
| A | 3GPP. "3GPP TR 23.700-86 V0.2.0 (2022-04)"<br>*3rd Generation Partnership Project; Technical Specification Group Services and System Aspects; Study on Architecture Enhancement to support Ranging based services and sidelink positioning; (Release 18),* 14 April 2022 (2022-04-14),<br>entire document | 1-84 |

Form PCT/ISA/210 (second sheet) (July 2022)

38

## INTERNATIONAL SEARCH REPORT
### Information on patent family members

International application No.

**PCT/CN2022/123348**

| Patent document cited in search report | | | Publication date (day/month/year) | Patent family member(s) | | | Publication date (day/month/year) |
|---|---|---|---|---|---|---|---|
| US | 2021297206 | A1 | 23 September 2021 | WO | 2021188208 | A1 | 23 September 2021 |
| | | | | TW | 202137785 | A | 01 October 2021 |
| | | | | US | 11601235 | B2 | 07 March 2023 |
| | | | | EP | 4122255 | A1 | 25 January 2023 |
| | | | | BR | 112022018215 | A2 | 25 October 2022 |
| | | | | KR | 20220155429 | A | 22 November 2022 |
| | | | | IN | 202247046104 | A | 19 August 2022 |
| | | | | CN | 115280860 | A | 01 November 2022 |
| WO | 2022062891 | A1 | 31 March 2022 | CN | 114257355 | A | 29 March 2022 |
| CN | 113079579 | A | 06 July 2021 | CN | 113079579 | B | 09 December 2022 |
| | | | | WO | 2021135853 | A1 | 08 July 2021 |
| CN | 111436031 | A | 21 July 2020 | WO | 2020143745 | A1 | 16 July 2020 |
| CN | 114830697 | A | 29 July 2022 | | None | | |
| WO | 2021121058 | A1 | 24 June 2021 | EP | 4068810 | A1 | 05 October 2022 |
| | | | | EP | 4068810 | A4 | 11 January 2023 |
| | | | | US | 2023048608 | A1 | 16 February 2023 |
| WO | 2021240478 | A1 | 02 December 2021 | EP | 4158829 | A1 | 05 April 2023 |
| | | | | BR | 112022024306 | A2 | 27 December 2022 |
| | | | | WO | 2021240479 | A1 | 02 December 2021 |
| | | | | EP | 4158828 | A1 | 05 April 2023 |
| | | | | KR | 20230019102 | A | 07 February 2023 |
| | | | | CN | 115699663 | A | 03 February 2023 |
| | | | | CN | 115699662 | A | 03 February 2023 |
| WO | 2022068836 | A1 | 07 April 2022 | CN | 114339987 | A | 12 April 2022 |
| WO | 2022170512 | A1 | 18 August 2022 | | None | | |

Form PCT/ISA/210 (patent family annex) (July 2022)